# EUROPÄISCHE PATENTSCHRIFT

(11) **EP 2 100 197 B1**
(45) Veröffentlichungstag und Bekanntmachung des Hinweises auf die Patenterteilung: **24.08.2016**
(21) Anmeldenummer: 07857349.0
(22) Anmeldetag: 10.12.2007
(51) Int. Cl.: G05B 19/409, G06F 3/048

(54) **BEDIENEINHEIT MIT TOUCHSCREEN-TASTEN**
OPERATING UNIT WITH TOUCHSCREEN KEYS
UNITÉ DE COMMANDE À TOUCHES D'ÉCRAN TACTILE

(30) Priorität: 13.12.2006 CH 20272006; 27.06.2007 CH 10342007
(43) Veröffentlichungstag der Anmeldung: 16.09.2009
(73) Patentinhaber: Netstal-Maschinen AG, 8752 Näfels (CH)
(72) Erfinder: WERFELI, Friedrich, 8762 Schwändi (CH); HUTTER, Jens, 8753 Mollis (CH)
(74) Vertreter: Wilhelm, Ludwig
(86) Internationale Anmeldenummer: PCT/EP2007/063629
(87) Internationale Veröffentlichungsnummer: WO 2008/071669

(56) Entgegenhaltungen:
- WO-A-01/96969
- WO-A-2005/029983
- WO-A-2005/050428
- WO-A-2005/076117
- WO-A-2007/025396
- WO-A2-01/67191
- WO-A2-01/67193
- US-A1- 2004 046 746
- US-A1- 2004 090 428
- US-B1- 6 492 978

## Beschreibung

### Technisches Gebiet

Die Erfindung betrifft ein Verfahren zur Steuerung einer oder mehrerer Maschinen bzw. einer Produktionszelle mit repetierbaren Abläufen über eine Maschinensteuerung sowie eine Bedieneinheit, ausgebildet als Mensch-Maschinen-Interface (MMI), wobei die Produktionsparametrierung und die Konfiguration des Produktionsablaufes mittels Tasten, mit Blick auf die Bedieneinheit bzw. einen Hauptbildschirm und die operativen Steuereingaben mittels Maschinenbewegungstasten, mit Blick auf die Maschine, eingegeben und verändert werden können.

Die Erfindung betrifft ferner eine Steuervorrichtung für eine oder mehrere Maschinen bzw. eine Produktionszelle mit repetierbaren Abläufen über eine Maschinensteuerung sowie eine Bedieneinheit, ausgebildet als Mensch-Maschinen-Interface (MMI), wobei die Produktionsparametrierung und die Konfiguration des Produktionsablaufes mittels eines ersten Bedienfeldes mit einem Hauptbildschirm und die operativen Steuereingaben mittels Maschinenbewegungstasten eines zweiten Bedienfeldes eingebbar und veränderbar sind.

### Stand der Technik

Die Steuerung von Maschinen und Vorrichtungen, insbesondere einer Produktionszelle mit zyklisch repetierbaren Abläufen für die Herstellung von Massenteilen, stellt eine grosse Anzahl an Grundanforderungen:
- In der Regel wird eine Maschinensteuerung mit einer speicherprogrammierbaren Steuerung (SPS) oder mit einem Industrie-PC (IPC) inklusive kommerzielle Desktop- oder Laptop-PC's verwendet. Die Steuerteile sind, abgesehen von Bildschirm und PC, in einem Schaltschrank eingebaut. Im Schaltschrank befinden sich ferner ein Umrichter für die Steuerung einzelner Regler sowie Hochleistungsprozessorkarten für die Hauptachsen der Maschine und alle elektrischen / elektronischen Hilfseinrichtungen und Hauptschalter für die Stromzufuhr.
- Bei neueren Maschinen, insbesondere bei Spritz- oder Druckgiessmaschinen, kommen Steueraufgaben für Hilfsvorrichtungen, wie Zu- und Abfuhr, Entnahmeroboter, Nachkühleinrichtungen, usw. hinzu.
- Der Bediener muss für repetierbare Abläufe in der Lage sein, den Ablauf festzulegen, die Produktionsparameter einzugeben und zu verändern, wozu in der Praxis eine gesonderte Bedieneinheit verwendet wird.
- Die Bedieneinheit hat eine Mehrfachfunktion und wird als Mensch-Maschinen-Interface, abgekürzt MMI, bezeichnet und kann eigene Rechner und Speicher aufweisen, ferner vom Kunden zugängliche Schnittstellen für die Verwendung weiterer Geräte wie USB-Harddisk, USB-Laufwerke oder USB-Flashspeicher.
- Ein unentbehrlicher Bestandteil des MMI ist ein Bildschirm, an dem übersichtlich die Komponenten der Maschine, deren Prozessabläufe sowie die Prozessparameter dargestellt werden.

In der Folge wird als bevorzugtes Beispiel auf den Bereich von Spritzgiessmaschinen Bezug genommen. Für die Steuerung von Spritzgiessmaschinen kommt eine weitere wichtige Grundforderung hinzu, nämlich eine freie Programmierbarkeit der Konfiguration des Ablaufes eines Spritzgiessprozesses. Mit einer Spritzgiessmaschine werden in aller Regel unterschiedliche Spritzgiessteile hergestellt. Für jedes unterschiedliche Spritzgiessteil muss ein gesondertes Spritzgiesswerkzeug eingesetzt werden. Je nach Komplexität des Spritzgiessteils sind beispielsweise ein oder mehrere Kernzüge, ferner Ausstoss- und Entnahmehilfen und Peripheriegeräte erforderlich. Als Folge müssen für jeden neuen Spritzgiessauftrag die Maschinenabläufe neu programmiert werden. Die Ablaufprogrammierung sowie die Parametrierung erfolgen normalerweise über die Bedieneinheit an der Maschine selber.

Eine bekannte Lösung dafür ist in der EP 0 573 912 beschrieben. Bei dem Verfahren zur Steuerung einer Kunststoff-Spritzgiessmaschine werden in einer den Bediener führenden Form die für den Ablauf eines Spritzgiesszyklus erforderlichen Betriebsparameter über eine Eingabeeinheit in eine diese Betriebsparameter speichernde Datenverarbeitungseinheit eingegeben. Bei der Eingabe für das Einrichten des Spritzwerkzeuges wird für den Ablauf und die Konfiguration des Spritzgiesszyklus in Kenntnis des physikalisch und des maschinenseitig und werkzeugseitig konstruktiv bedingt möglichen Verfahrensablaufes von Spritzzyklen dem Bediener eine selektive Auswahl an Eingabemöglichkeiten zur Verfügung gestellt. Dadurch können die zum Einrichten der Spritzgiessmaschine notwendigen Parameter schneller und fehlerfrei eingegeben werden. Nach der Ersteingabe für einen vollständigen Spritzgiesszyklus werden ein oder mehrere Spritzgiesszyklen auf Grund der gespeicherten Betriebsparameter durchgeführt und die Einstellungen je nach Erfordernis für eine anschliessende automatische Produktion der Spritzgiessteile optimiert.

Wird ein neues Spritzwerkzeug das erste Mal in Betrieb genommen, dann geht der Bediener nach einem Betriebsmodus "Einrichten" vor. Dabei kann der Einrichter schrittweise vorgehen und entsprechend Teile des Ablaufes mit den dafür erforderlichen Parametern programmieren und schrittweise die Bewegungsabläufe ohne Spritzmaterial vorsichtig aktivieren. Für diesen Zweck muss er am Bedienterminal die entsprechenden operativen Tasten, zum Beispiel mit der Funktion "hold to run", an einer Bedientastatur drücken.
- Programmiereingaben am Bildschirm, bei denen das Auge immer auf den Bildschirm fixiert ist: Die Eingabe geschieht durch ein Pointingdevice, mit dem eine Marke auf dem Bildschirm verschoben wird, deren Positionierung die Eingabe bestimmt. Das Feedback geschieht optisch am Bildschirm. Als Pointingdevices sind bekannt: Kursortasten, Maus, Trackball, Touchscreen, Touchpad, Scrollrad und Joystick. Wenn eine Anwendung ausschliesslich auf bildschirmzentrierte Eingaben angewiesen ist, hat sich heute am Markt ein Touchscreen-Bildschirm stark verbreitet. Bei komplexeren Funktionen, wie drag and drop, Verschieben von Elementen, oder Anwahl einer Anzahl Elemente aus vielen ist die Maus oder der Trackball immer noch ungeschlagen. Bei Spritzgiessmaschinen betrifft dies alle Programmierarbeiten, die Navigation und die Systemeinstellungen. Bei Programmiereingaben am Bildschirm spricht man von Bedienen am Sichtfeld. Ein Touchscreen ist über die Bildfläche manipulierbar. Er ist ein bedienbarer Bildschirm.
- Operative Befehle an die Maschine, bei denen das Auge in der Regel auf ein Maschinenteil gerichtet ist: Für diese Funktionalität können die bekannten Pointingdevices aus naheliegenden Gründen nicht verwendet werden. Als Eingabemittel haben sich bei Spritzgiessmaschinen bis heute mechanische Tasten und Dreh- / Knebelschalter mit zwei Aktivierungsrichtungen als Maschinenbewegungstasten durchgesetzt.

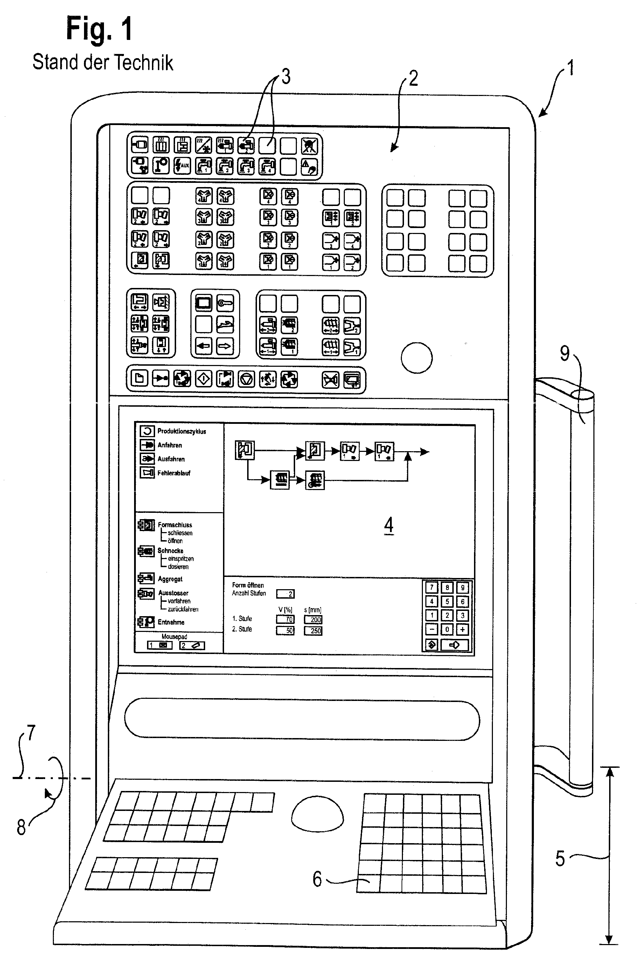

Die Figur 1 zeigt eine Bedieneinheit 1 des Standes der Technik, wie sie von der Anmelderin hergestellt wird. Der oberste Sektor zeigt ein oberstes Bedienfeld 2 mit einer grossen Anzahl mechanischer Tasten bzw. Maschinenbewegungstasten 3, welche jeweils entsprechend ihrer Funktion mit einem fest zugeordneten Symbol für operative Eingriffe versehen sind. Der mittlere Sektor ist ein Bildschirm 4 mit einer Zustandsanzeige für einzelne Komponenten der Maschine und für die Ist-Zustände bezüglich der Prozessparameter. Auf dem Bildschirm 4 können beliebige Darstellungen, Schemen und Prozessabläufe aufgerufen und angezeigt werden. Der Aufruf erfolgt durch entsprechende Tasten des untersten Bedienfeldes bzw. der Tastatur 5, oder er kann auch über das obere Feld ausgeführt werden. Der unterste Sektor der Figur 1 zeigt das Bedienfeld 5 für die Eingabe der Parameterwerte mit klassischen mechanischen Tasten. Die Tastatur 5 ist über eine horizontale Achse 7 auf- und abklappbar (Pfeil 8) oder einschiebbar, damit diese bei Nichtgebrauch nicht vorsteht. Dies erlaubt, analog zu einer Schreibmaschinentastatur, mit den Fingern die einzelnen Eingabetasten 6 zu bedienen. Die ganze Bedieneinheit ist nach den Gesichtspunkten der Ergonomie konzipiert und kann auch als Ganzes mittels eines Handgriffes 9 in der Höhe verstellbar sein. Der Bildschirm 4 soll etwa auf Augenhöhe entsprechend der Grösse des jeweiligen Bedieners und das Bedienfeld 5 mit den mechanischen Tasten auf bequeme Lage und Höhe für Handeingaben gesetzt werden, oder er kann im Sinne der Ergonomie abgewinkelt werden.

Die WO01/96969 zeigt eine weitere Lösung des Standes der Technik für eine Bedieneinheit zu einer Spritzgiessmaschine. Diese zeigt einen Touchscreen, um den aussen herum mechanische Tasten angeordnet sind, welche in die Regionen A - E aufgeteilt werden. Die Symbole sind am Rand des Bildschirmes dargestellt. Diese Lösung ist im Zusammenhang mit dem situativen Wechsel der Darstellung geeignet. Diese Bedienung ist eine Verbesserung gegenüber den zuvor beschriebenen Lösungen, da weniger Tasten gebraucht werden. Die eigentliche Bedienung erfolgt auf dem Touchscreen. Unterhalb des Bildschirms sind zusätzlich zwei Reihen mechanischer Tasten angeordnet. Ein grosser Nachteil, der die klassischen, mechanischen Tasten begleitet, ist deren Dedizierung. Jede Taste hat eine Beschriftung, die deren Zweck beschreibt. Da diese Beschriftung fix ist, kann die Taste nur für eine Funktion gebraucht werden.

Der Erfindung wurde nun die Aufgabe gestellt, Lösungswege zu suchen, bei denen die beschriebenen Nachteile vermieden werden können, welche jedoch alle Grundforderungen an ein Mensch-Maschinen-Interface (MMI) erfüllen:
- Bedienung mit Blick auf den Bildschirm,
- Bedienung mit Blick auf die Maschine, besonders bei der Funktion "hold to run",
- kostengünstige Basis-Lösung für unterschiedliche Maschinentypen sowie
- einfache, bequeme und rasch zu lernende Bedienung.

### Darstellung der Erfindung

Das erfindungsgemässe Verfahren ist dadurch gekennzeichnet, dass zumindest ein Teil der operativen Steuereingaben für die Maschinenbewegung mittels für ihre Funktion programmierbarer, auf einem Bildschirm angebrachter haptiler Tasten und / oder taktiler sicht- und erfühlbarer Touchscreen-Tasten mit je zugeordnetem Bildschirmfeld gemacht werden.

Die erfindungsgemässe Vorrichtung ist dadurch gekennzeichnet, dass zumindest ein Teil der Maschinenbewegungstasten mittels für ihre Funktion programmierbarer, auf einem Bildschirm aufgebrachter haptiler Tasten und / oder taktiler, insbesondere über Ränder sicht- und erfühlbarer Touchscreen-Tasten, mit je unmittelbar zugeordneten Bildschirm- bzw. Symbolfeld ausgebildet und insbesondere auf der Fläche eines Bildschirms angeordnet sind.

Als taktile Wahrnehmung bezeichnet man eine Komponente der haptischen Wahrnehmung von Lebewesen. Man spricht auch von einer taktilen Oberflächensensibilität. Das bekannteste Beispiel für eine taktile Wahrnehmung ist die Blindenschrift und das Wahrnehmen eines Strassenrandes mit dem Blindenstock. Es ist eine Wahrnehmung von anderen Körpern durch den Tastsinn. Das haptile Erkennen nutzt noch eine weitere Form der Sinneswahrnehmung, welche in den tieferen Hautschichten, speziell an der Hand bzw. am Finger eines Menschen, liegt. Es handelt sich um das Spüren einer Reaktion der berührten Taste, beispielsweise mittels Druck, Vibration oder Wärme. Bei der taktilen Wahrnehmung gibt der berührte Körper keinerlei aktive Antwort. Dies im Unterschied zur haptilen Wahrnehmung. Hier wird das aktive Berühren gleichsam quittiert, in dem Sinne, dass ein Eingriff tatsächlich zur Kenntnis genommen und durchgeführt wird.

Von den Erfindern ist erkannt worden, dass im jüngsten Stand der Technik zwar fortschrittliche Mittel verwendet wurden. Diese waren jedoch mit grundlegenden Nachteilen verbunden. Für gewisse Funktionen hat sich der Touchscreen als optimale Lösung in der Praxis mit Erfolg durchgesetzt. Wenn bei einer Maschine Teile bewegt werden müssen, ist es jedoch sehr problematisch, wenn dies auf einem Touchscreen gemacht wird. Neben der blossen Kontaktnahme des Fingers mit der Bildschirmoberfläche hat der Bediener überhaupt keine Führung mehr. Die Gefahr ist gross, dass er mit dem Finger wegrutscht, vor allem, wenn er nicht auf den Bildschirm sondern auf die Maschine blickt. Der Finger hat keinerlei Führung. Dies im Unterschied, etwa zu einer klassischen mechanischem Taste. Die neue Erfindung schlägt demgegenüber vor, der Taste selber eine wichtige Eigenschaft, insbesondere auch eine Führungsfunktion für die Finger zu geben. Dies durch die Ausgestaltung als haptile oder taktile Taste. Mit der taktilen Ausgestaltung spürt der Bediener, beispielsweise mit Rändern rund um die Taste, dass er sich wirklich auf der Taste befindet, und er spürt bei jedem Wegrutschen den Rand. Im Falle der haptilen Ausgestaltung spürt er bei der Betätigung der Taste gleichsam eine Tiefenwirkung, hier zum Beispiel bei der Betätigung eines Knackfrosches. Er spürt bzw. hört das Knacken. Darüber hinaus wird die Taste durch die Programmierbarkeit auf eine höhere Funktionsstufe gebracht.

Der zweite Kernansatz der neuen Erfindung liegt darin, dass der Maschinenbewegungstaste ein Bildschirmfeld zugeordnet wird bzw. dass die Maschinenbewegungstasten auf der Fläche eines Bildschirms selber angeordnet sind. Der Bediener wird nun gleichsam durch Bild und Taste exakt auf die zu betätigende Funktion bzw. Bewegung gelenkt. Dies ist weder bei einem Touchscreen des Standes der Technik noch bei mechanischen Tasten der Fall.

Die neue Erfindung gestattet nun eine ganze Anzahl besonders vorteilhafter Ausgestaltungen. Dazu wird auf die abhängigen Ansprüche Bezug genommen.

Bevorzugt werden die Maschinenbewegungstasten mit dem, den einzelnen Tasten unmittelbar zugeordneten Bildschirmfeld programmiert und fallbezogen aktiviert. Im Falle der taktilen sicht- und erfühlbaren Touchscreen-Tasten wird das jeweils zugeordnete Bildschirmfeld im Bereich der Tastenfläche selber programmiert und sichtbar gemacht. Im Falle der haptilen Tasten wird für jede Taste ein Bildschirmfeld im Bereich um die Taste programmiert und sichtbar gemacht wird.

Die neue Lösung konzentriert die Bedienung auf zwei intelligent ausgebildete Bedienfelder, welche auf einem Datenaustausch in beiden Richtungen basiert. Die haptilen Tasten können auf einer Bildschirmfläche selber angeordnet werden. Das erste Bedienfeld ist konzipiert für die bildschirmbezogenen Eingaben und das zweite Bedienfeld für die maschinenbezogenen Eingaben mit Blick auf die Maschine. Hinterlegt ist eine Software, welche für die Blldschlrmkonfiguratlon automatisch entsprechende Eingabestellen auf dem zweiten Bedienfeld aktivieren kann.

Eine weitere vorteilhafte Ausgestaltung des erfindungsgemässen Verfahrens ist dadurch gekennzeichnet, dass im Falle der haptilen Lösung das zweite Bedienfeld nach dem Windows-Prinzip genutzt wird, beispielsweise zur gleichzeitigen oder nacheinanderfolgenden Nutzung für die Steuerung der Maschinenabläufe oder als Hilfscomputer für die Bearbeitung von Text und Zahlen. Die am Bildschirm angebrachten Folientasten sind auf dem Bildschirm mit jeweils zugeordnetem Symbolfeld angeordnet, wobei das Symbolfeld vom ersten Bedienfeld aktiviert werden kann und der Bediener die Eingaben und Steuerbefehle mittels der Folientasten des zweiten Bedienfeldes macht. Es ist jedoch auch eine Aktivierung der Tasten des zweiten Bedienfeldes durch Eingabestellen des zweiten Bedienfeldes möglich.

Die neue Lösung eröffnet verschiedene überraschend vorteilhafte Ausgestaltungen, wie in der Folge noch ausgeführt wird:
- Der Bediener erspürt die Maschinenbewegungstaste. Je nach Ausgestaltung bekommt er von der Taste selber ein "Feedback" durch Vibrieren bzw. durch den typischen Knackeffekt bei einem Knackfrosch, ferner
- die Möglichkeit einer klaren und übersichtlichen Funktionszuordnung für beide Bedienfelder,
- eine logische Trennung von der Programmierarbeit am Bildschirm und der operativen Eingriffe an der Maschine. Bei der Arbeit am Bildschirm bleibt das Auge am Bildschirm. Für die operativen Eingriffe kann das zweite Bedienfeld gleichsam für eine blinde Bedienung ausgestaltet werden.
- Die Möglichkeit einer massiven Reduktion der Eingriffsstellen für das zweite Bedienfeld, sodass dieses kleiner und einfacher gestaltbar ist, sowie
- die Möglichkeit einer einfachen Fernbedienung mittels eines mobilen Handsteuergerätes, da dieses nunmehr eine minimale Anzahl Tasten benötigt.

Die neue Lösung gestattet zwei Ausgestaltungswege, besonders für das zweite Bedienfeld. In beiden Fällen wird die Fläche des Bedienfeldes für das Anordnen der Maschinenbewegungstasten genutzt. In beiden Ausgestaltungswegen kann das zweite Bedienfeld zur Anzeige beliebiger Symbole programmiert und genutzt werden.
- Der erste Lösungsweg stützt sich primär auf die haptile Sensorik des Menschen;
- der zweite Lösungsweg stützt sich primär auf die taktile Sensorik des Menschen.

Gemäss dem ersten Lösungsweg werden bevorzugt im zweiten Bedienfeld haptile Tasten, beispielsweise Folientasten, insbesondere Knackfrösche, Kurzhubtasten, Silikontasten, Piezoschalter, kapazitive Schalter, usw. verwendet.

Gemäss dem zweiten Lösungsweg werden bevorzugt im zweiten Bedienfeld taktile Tasten, insbesondere sicht- und erfühlbare Touchscreen-Tasten eingesetzt, beispielsweise mit erfühlbaren Rändern um jede Taste herum.

Die beiden Lösungswege können jedoch auch in beliebiger Kombination verwendet werden.

Gemäss einer weiteren Ausgestaltung wird am ersten Bedienfeld die Ablaufprogrammierung für die Funktion aller Komponenten der Maschine bzw. Vorrichtung durchgeführt und am zweiten Bedienfeld, zur Reduzierung der Eingabestellen ein Teil der Eingabestellen aufgrund entsprechender Programmierung und Anzeigen an den Eingabestellen mehrfach benutzt. Der Bediener spürt während der Ablaufprogrammierung und Parametrierung gar nicht, dass im Hintergrund bezüglich der einzelnen Komponenten die für die operativen Eingriffe notwendigen Eingabestellen für ihre Funktion vorbereitet werden, so dass am zweiten Bedienfeld die für die Parametrierung der einzelnen Komponenten und / oder die für die jeweils operativ zu beeinflussenden Komponenten benötigten Eingabestellen bei Aufruf einer Komponente auf dem Bildschirm automatisch aktiviert werden. Für den Bediener wird, sei es für das Einrichten eines Werkzeuges oder für operative Eingriffe, beispielsweise zur Optimierung der Prozessparameter, die Gesamtheit der dafür erforderlichen Informationen, mit Einschluss von aktuellen Prozessverläufen, vor Augen geführt und mit der kleinstmöglichen Anzahl von Eingabestellen ein logischer und sicherer operativer Zugriff gegeben.

Besonders bevorzugt werden die Maschinenbewegungstasten mit dem, der jeweiligen Taste zugeordneten Symbol programmiert und flexibel verwendet, derart, dass entsprechend der Produktionsmittelauswahl und / oder fallbezogen und / oder entsprechend der Betriebsart nur eine reduzierte Anzahl Maschinenbewegungstasten aktiviert wird. Der Bediener hat zwar eine grössere Anzahl Maschinenbewegungstasten; für ihn erscheinen aber nur diejenigen Tasten, welche er für die momentanen Eingriffe benötigt, bevorzugt durch Aufleuchten oder hervorgehoben durch unterschiedliche Farben oder Helligkeit. Das zweite Bedienfeld steht vorzugsweise im Datenaustausch von und zu dem ersten Bedienfeld, wobei mit der Programmierung am ersten Bedienfeld die Funktion zumindest eines Teils der Eingabestellen bzw. der Maschinenbewegungstasten des zweiten Bedienfeldes definiert wird. Die am zweiten Bedienfeld die für die jeweils operativ zu beeinflussenden Komponenten benötigten Tasten werden mit zugeordnetem Symbol bei Aufruf einer konkreten Komponente auf dem Bildschirm aufgrund der hinterlegten Programme automatisch aktiviert. Der Bediener kann die Eingaben für die Ablaufprogrammierung sowie die Parametrierung mit Blick auf die Bedieneinheit mittels Trackball des ersten Bedienfeldes und die operativen Eingriffe an der Maschine mit Blick auf die Maschine am zweiten Bedienfeld mittels haptiler Tasten und / oder sicht- und erfühlbarer Touchscreen-Tasten machen, wobei das erste und zweite Bedienfeld in beiden Richtungen in Funktionsverbindung stehen. Der grosse Vorteil dieser Lösung liegt darin, dass ein Teil der Maschinenbewegungstasten mit den zugeordneten Symbolen für unterschiedliche Komponenten und Funktionsverbindungen flexibel verwendet werden kann. Zumindest ein Teil der Maschinenbewegungstasten können eigenständige Sektoren sein, derart, dass zwei oder mehrere der betreffenden Tasten gleichzeitig betätigt werden können.

Im Betriebsmodus "Einrichten" erfolgt die Konfiguration des Produktionsablaufes mit Blick auf den Bildschirm im Bereich des ersten Bedienfeldes und die Parametrierung sowie die Eingaben von Steuerkommandos bzw. Steuerbefehlen für die reale Bewegung der Komponenten der Produktionszelle über die haptilen Tasten im Bereich des zweiten Bedienfeldes. Für den Betriebsmodus "Automatischer Betrieb" erfolgen operative Eingaben und Steuerbefehle am zweiten Bedienfeld und operative Eingaben über die Tastatur mit Trackball im Bereich des ersten Bedienfeldes, wobei entsprechende Korrekturen von Betriebsparametern im ersten Bedienfeld am Bildschirm angezeigt werden und Eingang in die Speicherung finden. Dabei können die physikalischen Grössen bzw. Parameter, z.B. Geschwindigkeit (V), Druck (P), Kraft (F) und Weg (S) über "+" (Plus)-Tasten bzw. "-" (Minus)-Tasten eingegeben und erhöht oder erniedrigt werden. Besonders bevorzugt ist das zweite Bedienfeld zumindest sektorweise als Bildschirm ausgebildet, auf dem die Symbole mit den, den entsprechenden haptilen Tasten zugeordneten Symbolfeldern programmiert und angezeigt werden und / oder die Symbole direkt auf den sicht- und erfühlbaren Bildschirmtasten programmiert und angezeigt werden.

Die Symbolfelder bzw. Symbole werden als Bildschirm für Statusanzeigen und / oder für die Anzeige der klassischen Fachsymbole, insbesondere Spritzgiesssymbole und / oder zur Anzeige von Farben, z.B. rot, grün, gelb, und / oder für eine statische oder dynamische Anzeige und / oder als Balkendiagramme und / oder zur grafischen Darstellung von Zuständen, genutzt. Ein besonders bevorzugtes Anwendungsgebiet für die neue Lösung sind Spritzgiessmaschinen oder Druckgiessmaschinen, welche Teil einer Produktionszelle für die zyklische Herstellung von Spritzgiessteilen bzw. Druckgiessteilen sind. Dabei werden vom Bediener der Produktionsablauf und alle für den Produktionsablauf des Spritzgiess- bzw. Druckgiessprozesses erforderlichen Betriebsparameter mittels einer, diese Betriebsparameter speichernden Datenverarbeitungseinheit an der Bedieneinheit im Bereich des ersten Bedienfeldes konfiguriert bzw. eingespielt und die operativen Betriebsparameter vom zweiten Bedienfeld aus in einer dafür vorbereiteten Maske des ersten Bedienfeldes eingegeben und geändert. Dies ergibt eine scharfe logische Trennung der beiden Bedienfelder. Das zweite operative Bedienfeld gestattet keine Ablaufänderungen, da Ablaufänderungen einen völlig anderen Hintergrund haben, welcher dem Einrichter klar ist. Der Bediener in der Funktion als "Operator" hat diese Kenntnisse nicht. Deshalb sind ihm entsprechende Ablaufeingaben verwehrt. Falsche Ablauffehleingaben können nicht nur zu Betriebsstörungen, sondern auch zu Werkzeug- bzw. Maschinenschäden führen. Fehler bei Parametereingaben sind insofern unproblematisch, als eine Hintergrundprogrammierung für jeden Parameter obere und untere Grenzen festlegt.

Gemäss einer weiteren bevorzugten Ausgestaltung ist das zweite Bedienfeld aufgeteilt in haptile Tasten und den haptilen Tasten je zugeordnete programmierbare Symbolfelder, wobei der Bediener das zweite Bedienfeld mit entsprechender Programmierung als Hilfscomputer mit zumindest einem Teil der haptilen Tasten als Eingabetastatur, insbesondere nach dem internationalen Qwerty- bzw. Qwertz- oder Azerty-Prinzip (Frankreich), und die Symbolfelder als Bildschirme für die Bearbeitung von Text und Zahlen nutzen kann. Diese Funktion war im Stand der Technik nicht möglich, weil das zweite Bedienfeld nicht als Bildschirm oder als eine aus mehreren Bildschirmen bestehende Bildschirmunterstützung ausgebildet war. Vorteilhafterweise wird dabei das zweite Bedienfeld nach dem Windows-Prinzip genutzt zur gleichzeitigen oder nacheinanderfolgenden Nutzung für die Steuerung der Maschinenabläufe oder als Hilfscomputer für die Bearbeitung von Text und Zahlen.

Unter Tasten werden normalerweise mechanische Tasten verstanden, wobei in der Regel durch Drücken mit einem Finger ein Eingriff vorgenommen wird. Im Falle von elektrischen Einrichtungen wird entsprechend eine Schaltfunktion ausgelöst. Dazu gibt es eine Vielzahl von Ausgestaltungen, beispielsweise Drucktasten, Kippschalter, Schieber, symbolisierte oder virtuelle Tasten am Bildschirm. Unter Bedienfeld wird die vordere Oberfläche eines Bedienkastens verstanden, welcher in der Regel in der Nähe der Haupteingriffe an der Maschine selbst angeordnet wird und der direkten Bedienung dient. Im Unterschied dazu ist der Schaltschrank, der viel grössere Abmessungen hat, meistens neben der Maschine, oft auch an einer Wand, platziert.

Wie bereits dargestellt, kann gemäss der neuen Lösung nur eine beschränkte Zahl von Folientasten physikalisch vorgegeben werden. Mit programmunterstützten Symboldarstellungen auf dem Bildschirm und entsprechenden Funktionsverbindungen können die selben Folientasten für die Steuerung anderer Komponenten und Funktionsverbindungen beliebig programmiert und unterschiedlich verwendet werden. Der Beliebigkeit sind jedoch insofern Grenzen gesetzt, als der Bediener zumindest für die wichtigsten Maschinenbewegungen die entsprechenden Tasten immer am selben Ort haben will. Auf diese Weise kann er weiterhin eigene Automatismen nutzen.

Vorrichtungsgemäss wird die Bedieneinheit als programmierbares Softkeyboard ausgebildet, wobei die Maschinenbewegungstasten für die operativen Eingriffe mit den zugeordneten Symbolen des zweiten Bedienfeldes programmierbar sind, derart, dass die Maschinenbewegungstasten des zweiten Bedienfeldes mit den je zugeordneten Symbolen über das erste oder über das zweite Bedienfeld aktivierbar sind. Die Maschinenbewegungstasten werden mit dem der jeweiligen Taste zugeordneten Symbol programmiert und flexibel verwendet, derart, dass entsprechend der Produktionsmittelauswahl und / oder fallbezogen und / oder entsprechend der Betriebsart nur eine reduzierte Anzahl Maschinenbewegungstasten aktivierbar sind. Durch die entsprechende Bezeichnung soll die Zuordnung der einzelnen haptilen Taste mit dem jeweiligen Symbolfeld unmissverständlich sein. Als heutiger "best mode" können die haptilen Tasten streifenartig auf einem Bildschirm aufgebracht werden, mit je streifenartig ausgebildeten zugeordneten Symbolfeldern, wobei auf der Bildschirmfläche abwechselnd Streifen für haptile Tasten und Symbolfelder oder einzelne Bildschirme als Symbolfelder zwischen den Tastenstreifen angeordnet sind. Die Streifen können horizontal, vertikal oder als Kombination davon angeordnet sein. Das Symbol kann sich somit unterhalb, oberhalb oder neben der zugeordneten Taste befinden. Es ist jedoch auch möglich, dass die Anordnung auf ganz andere Weise gelöst wird, beispielsweise schachbrettartig. Gemäss einem weiteren Ausgestaltungsgedanken können, sei es auf oder neben den Tasten, statische Bilder oder Sequenzen von Bildfolgen oder sogar Videosequenzen, eingeblendet werden. Es ist ferner möglich, die Tasten in Bezug auf Form und Grösse beliebig festzulegen. Das gleiche gilt für die Symbolfelder. Einzelne Symbolfelder können auch als Miniatur-Bildschirm ausgebildet werden, welcher für mehrere Tasten genutzt werden kann.

Gemäss einem weiteren vorteilhaften Ausgestaltungsweg wird das Mensch-Maschinen-Interface modulartig aufgebaut und weist wenigstens zwei Bereiche bzw. Bedienfelder auf. Die zwei Bedienfelder können aus einem doppelt genutzten Bildschirm oder zwei getrennten Bildschirmen bestehen. Bevorzugt weist das Mensch-Maschinen-Interface wenigstens zwei Basismodule, ein Bildschirm-Basismodul sowie ein Tastatur-Basismodul, auf. Das Bildschirm-Basismodul verfügt über ein Handbedienungsmodul sowie ein Bildschirmmodul für die Ablaufkonfiguration sowie die Parametrierung. Ein weiterer Ausgestaltungsweg liegt darin, dass dem Mensch-Maschinen-Interface ein USB-Kontrollermodul zugeordnet ist, wobei das Mensch-Maschinen-Interface mehrere Module aufweist, welche an einer Stützkonsole angebracht sind. Das USB-Kontrollermodul kann in der Stützkonsole selber angeordnet werden.

Vorteilhafterweise ist auf dem Bildschirm des ersten Bedienfeldes eine Eingabemaske darstellbar, derart, dass auf der Bedieneroberfläche des ersten Bedienfeldes der Ablauf und die Parametrierung konfigurierbar und parametrierbar sind. Dabei weist die Eingabemaske insbesondere ein Ablaufdarstellungsfeld, eine Liste der steuerbaren Maschinenkomponenten mit auswählbaren Kommandos und ferner ein Parametrierfeld auf. Die jeweils erforderlichen Folientasten werden durch die Anwahl eines Komponentenschemas oder der Parameteranzeigen auf dem Bildschirm für die Eingabestellen des ersten Bedienfeldes automatisch mit den entsprechenden dafür notwendigen Funktionsverbindungen für die Folientasten zugeschaltet und aktiviert. Der Bediener wird auf diese Weise direkt auf seine Einflussmöglichkeit gelenkt.

Besonders vorteilhaft ist es, wenn die Maschinenbewegungstasten eine vielfache Funktion aufweisen, insbesondere:
- eine Leuchtanzeige als Statusanzeige,
- Anzeigen eines Symbols und / oder Text in Bezug auf die durch die Tasten auszulösende Funktion bzw. Bedeutung der Tastenfunktion,
- als Steuereingabe und Steuerbefehl für eine Aktivierung von Maschinenabläufen und / oder Aenderung von Produktionsparametern.

Wenn der Bediener beispielsweise die Komponente Spritzgiessaggregat auf dem Bildschirm des ersten oder zweiten Bedienfeldes aufgerufen hat und eine Verschiebung befehlen möchte, dann kann er im zweiten Bedienfeld nicht aus Versehen eine Eingabetaste für das Formschliessen drücken. Diese steht nämlich in dieser Situation nicht zur Verfügung. Gemäss einem zweiten Ausgestaltungsgedanken sind das erste und das zweite Bedienfeld auf je getrennten Bildschirmen angebracht. Besonders vorteilhaft werden dabei die Folientasten-Eingabestellen des zweiten Bedienfeldes auf wenigstens zwei oder mehreren Bildschirmen angeordnet. Ein weiterer ganz besonders vorteilhafter Lösungsweg liegt darin, dass das erste und zweite Bedienfeld oder, zumindest in Teilfunktionen dupliziert, als mobiles Handsteuergerät ausgebildet ist. Mit diesem Vorschlag kann ein schon lange bestehendes Bedürfnis befriedigt werden. Das Kernproblem jedes mobilen Handsteuergerätes besteht in der beschränkten Bedienerfläche einerseits und der Frage, welche Eingriffsmöglichkeiten über ein mobiles Handsteuergerät überhaupt sinnvoll sind. Hierzu ist mit der neuen Erfindung die Grundlage geschaffen worden.

### Weil gemäss der neuen Lösung

a) ein Datenaustausch in beiden Richtungen erfolgt,
b) die Anzahl aktiver Eingabestellen für operative Eingriffe so tief wie möglich gehalten wird und
c) die Parametrierung eine bildschirmbezogene Tätigkeit ist,

können mit wenigen Eingabestellen alle häufigen operativen Befehle sichergestellt werden. Bevorzugt wird das zweite Bedienfeld ortsfest angeordnet. Das mobile Handsteuergerät kann für die Bedienung gesperrt werden, und / oder es kann bei Bedienung über das mobile Handgerät das ortsfest zweite Bedienfeld eine Sperre aufweisen. Das mobile Handsteuergerät kann beispielsweise als Handy mit Bildschirm oder als PDA oder Smartphone oder Laptop ausgebildet sein, wobei der Datenaustausch über Draht oder drahtlos oder über Funk oder IR oder IrDA oder Bluetooth oder Wireless USB oder WLAN B/G erfolgen kann. Am mobilen Handsteuergerät kann dank des Datenaustausches in beiden Richtungen beispielsweise ein Komponentenschema oder ein Funktionsverlauf innerhalb des Spritzgiessprozesses auf dem Kleinbildschirm aufgerufen und die erforderlichen operativen Befehle eingegeben werden. Alle Sicherheitsdispositive in der Steuerung bleiben voll erhalten, weil die Befehle des mobilen Handsteuergerätes über die Bedieneinheit laufen.

Gemäss einem weiteren Ausgestaltungsweg weist die Bedieneinheit einen Zusatzkasten auf, insbesondere für Einlesestellen und / oder Sicherheitsschalter und / oder für weitere Schnittstellen, wie ein Touchpad auf einem Laptop und / oder eine andere elektronische Steuereinheit mit Fernbedienung und / oder eine Not-Austaste.

Der taktile Lösungsweg ist dadurch gekennzeichnet, dass der Bediener die Eingaben und Steuerbefehle an der Bedieneinheit mittels wenigstens einem ersten und einem zweiten Bildschirmbedienfeld macht, wobei er ein Teil der Eingaben mit Blick auf den Bildschirm und den anderen Teil der Eingaben mit Blick auf die Produktionsmaschine mittels sicht- und erfühlbaren Touchscreen-Tasten, unterstützt im Bereich eines zweiten Bedienfeldes, macht.

Die erfindungsgemässe Steuervorrichtung gemäss dem taktilen Lösungsweg ist dadurch gekennzeichnet, dass die Bedieneinheit wenigstens ein erstes und ein zweites Bildschirmbedienfeld und das zweite Bedienfeld sicht- und erfühlbare Touchscreen-Eingabestellen aufweist.

Gemäss einem weiteren besonders vorteilhaften Ausgestaltung wird ein Teil der Eingaben mit Blick auf den Bildschirm mittels Eingabestellen im Bereich des ersten Bedienfeldes und ein anderer Teil der Eingaben, insbesondere der operativen Eingaben, mit Blick auf die Maschine mittels sicht- und erfühlbaren Touchscreen-Stellen im Bereich des zweiten Bedienfeldes gemacht. Vorteilhaft ist jedoch, wenn auch der Teil der Eingaben mit Blick auf den Bildschirm mittels Touchscreen-Eingabestellen gemacht wird. Ein Touchscreen hat den grossen Vorteil, dass auf dem Bildschirmbild selber an den für die entsprechenden Funktionen markierten Stellen Eingaben gemacht werden können. Die neue Lösung erlaubt jedoch auch, den Touchscreen im umgekehrten Sinne zu benutzen, indem auf der Eingabestelle die betreffende Funktion angezeigt wird. Werden nun zusätzlich die Touchscreen-Stellen im Bereich des zweiten Bedienfeldes nicht nur sichtbar sondern durch entsprechende Profilgebung, z.B. durch vorstehende Umfassungsränder, auch erfühlbar gemacht, erleichtert dies das rasche Lernen der Bedienung. In der Anfangsphase kann sich der Bediener mit einem Blick versichern, dass er den Finger auf der richtigen Eingabestelle hat. Später wird er die Bedienung entsprechend dem Blindschreiben an der Schreibmaschine beherrschen.

Wie bereits dargestellt, wird gemäss der neuen Lösung vorteilhafterweise eine beschränkte Zahl von sicht- und erfühlbaren Touchscreen-Stellen bzw. Tasten physikalisch vorgegeben. Mit programmunterstützten Symboldarstellungen auf den Touchscreen-Stellen bzw. Tasten und entsprechenden Funktionsverbindungen können die selben Touchscreen-Stellen bzw. Tasten für die Steuerung anderer Komponenten und Funktionsverbindungen beliebig unterschiedlich verwendet werden. Daraus ergibt sich, dass das zweite Bedienfeld eine beschränkte, relativ kleine Zahl von Eingabestellen aufweist. Ein Teil der Eingabestellen des zweiten Bedienfeldes wird auf Grund entsprechender Programmierung für unterschiedliche Funktionen bzw. mehrfach benutzbar gemacht. Die je aktivierte Funktion wird automatisch an den Eingabestellen des zweiten Bedienfeldes anzeigbar gemacht.

In einer ganz besonders vorteilhaften Ausgestaltung der Steuervorrichtung werden die Touchscreen-Eingabestellen im ersten Bedienfeld koordinatenbezogen und die Touchscreen-Eingabestellen des zweiten Bedienfeldes sektorbezogen programmiert. Im ersten Bedienfeld sind die Eingabestellen bildbezogen und müssen passend zu dem Bild koordinatenbezogen programmiert werden. Anders ist die Situation für das zweite operative Bedienfeld. Hier gibt es eine Anzahl örtlich fixierter Eingabestellen, die jedoch einzeln für je wechselnde Funktionen programmiert werden müssen. Dazu weist die Touchscreenfunktion eine Software auf, über welche automatisch die aktivierbaren sicht- und erfühlbaren Touchscreen-Eingabestellen oder haptilen Tasten mit den entsprechenden Symbolen aufgezeigbar und beleuchtbar sind. Den Touchscreen-Eingabestellen wird ein taktiles Feedback zugeordnet zur sensorischen Bestätigung, dass ein Steuerbefehl tatsächlich eingegeben bzw. akzeptiert worden ist, wobei das taktile Feedback einzelnen Tasten, einzelnen Bedienfeldern oder einer ganzen Eingabeeinheit zugeordnet sein kann.

Die neue Erfindung bietet ganz verschiedene Ausgestaltungswege betreffend Bildschirm. So können die Touchscreen-Felder innerhalb einer Bildschirmfläche angeordnet und die sicht-und erfühlbaren Touchscreen-Eingabestellen durch das Anbringen einer profilbildenden Maske gebildet werden. Dazu kann sich eine Maske über die ganze Bildschirmfläche erstrecken, wobei zumindest ein Teil des Touchscreen-Feldes für die sichtbaren Tastscreen-Eingabestellen als unbedecktes Fenster oder als durchsichtige Schicht ausgebildet sein kann. Es ist ferner möglich, dass sich die Maske nur über das zweite Bedienfeld erstreckt und in dem Bereich der einzelnen Tasten Öffnungen aufweist, welche durch Ausstanzen und / oder durch eine Klarsichtfolie gebildet sind. Der Öffnungsbereich um die Tastfläche kann geprägte Merkmale wie Ränder oder Erhebungen oder entsprechende Bedruckungen aufweisen.

Gemäss einem zweiten Ausgestaltungsgedanken ist das erste und das zweite Bedienfeld auf je getrennten Bildschirmen angebracht. Besonders vorteilhaft werden dabei die Touchscreen-Eingabestellen des zweiten Bedienfeldes auf wenigstens zwei oder mehreren Bildschirmen oder je einem Bildschirm pro Touchscreen-Eingabestelle angeordnet. Dies erlaubt, wie weiter vorne ausgeführt, den Bildschirmaufbau so zu gestalten, dass die Touchscreen-Eingabestellen des zweiten Bedienfeldes sektorbezogen programmiert sind. Die Steuerung erkennt, welche Eingabestelle betätigt wurde, so dass der Befehl richtig verarbeitet wird. Gemäss einem weiteren Ausgestaltungsgedanken können die Maschinenbewegungstasten entweder
- als Streifen angeklebt oder
- als Streifen eingelassen oder
- als Folientastatur aufgeklebt sein.

### Kurze Beschreibung der Erfindung

Die Erfindung wird nun anhand einiger Ausführungsbeispiele mit weiteren Einzelheiten erläutert. Es zeigen:
- die Figur 1: eine Lösung des Standes der Technik;
- die Figuren 2a und 2b: eine ganze Bedieneinheit gemäss neuer Erfindung in Front- und Seitenansicht;
- die Figur 3: das zweite Bedienfeld in drei Aufbauschritten: - links oben: mit am Bildschirm aufgebrachten Folientastenstreifen, - links unten: der selbe Bildschirm mit auf dem Bildschirm aufgezeigten Symbolfeldern; - rechts: das zweite Bedienfeld mit Tasten und Symbolfeldern;
- die Figur 4: zeigt einen konkreten Anwendungsfall "Leerspritzen", aktiviert auf dem zweiten Bedienfeld mit haptilen Tasten;
- die Figur 5: schematisch die Datenverbindungen für die ganze Steuerung einer Spritzgiessmaschine;
- die Figur 6: den Bildschirm des zweiten Bedienfeldes als Filterscheibe aus Acrylglas (Plexiglas) vor dem Anbringen der haptilen Folientastenstreifen;
- die Figur 7a: schematisch einen Bildschirmausschnitt mit aufgebrachten haptilen Folientastenstreifen;
- die Figur 7b: einen Schnitt VII - VII der Figur 7a mit aufgeklebten haptilen Folientastenstreifen als erste Ausgestaltungsvariante;
- die Figur 7c: einen Schnitt VII - VII der Figur 7b mit eingelassenen haptilen Folientastenstreifen als zweite Ausgestaltungsvariante;
- die Figur 8a: einen ganzen Bildschirm mit haptiler Folientastatur mit den Knackfröschen über dem Bildschirm;
- die Figur 8b: eine dritte Ausgestaltungsvariante der haptilen Folientastatur als Schnitt VIII b;
- die Figur 8c: die elektronischen Leiterbahnen für die einzelnen Knackfrösche als Schnitt VIII c;
- die Figuren 9a - 9c: die unterschiedlichen Bedieneinheiten in Modulbauweise;
- die Figur 10: den Bildschirm des ersten Bedienfeldes in grösserem Massstab;
- die Figuren 11a - 11c: zeigen drei Beispiele von konkreten Bildschirmgrössen mit der Anordnung des ersten und zweiten Bedienfeldes mit taktilen Tasten;
- die Figur 12: eine Explosionsskizze der Bedieneroberfläche mit dem ersten und dem zweiten taktilen Bedienfeld auf einem Bildschirm;
- die Figur 13: eine Explosionsskizze der Bedieneroberfläche mit dem ersten und zweiten taktilen Bedienfeld mit zwei Bildschirmen;
- die Figur 14a: die erfindungsgemässe Lösung mit einem Handsteuergerät;
- die Figur 14b: die erfindungsgemässe Lösung mit einem tragbaren Laptop bzw. einem Notebook;
- die Figur 15a: schematisch ein Beispiel für eine Bedieneroberfläche der neuen taktilen Lösung;
- die Figur 15b: ein weiteres Beispiel für die Bedieneroberfläche der taktilen Lösung;
- die Figur 15c: die Figur 15b, ergänzt mit einem Zusatzbedienfeld der taktilen Lösung;
- die Figuren 16a -16e: zeigen verschiedene Anordnungen von haptilen Tasten und Symbolfeldem;
- die Figur 17: das zweite Bedienfeld mit Maschinenbewegungstasten, angeordnet in Blöcken gemäss Figur 1;
- die Figur 18a: das zweite Bedienfeld gemäss neuer Erfindung, wobei die Maschinenbewegungstasten ebenfalls in Blöcken angeordnet sind mit haptilen und taktilen Tasten;
- die Figur 18b: eine Kombination von Streifen und Blockanordnungen der Maschinenbewegungstasten.

### Wege und Ausführung der Erfindung

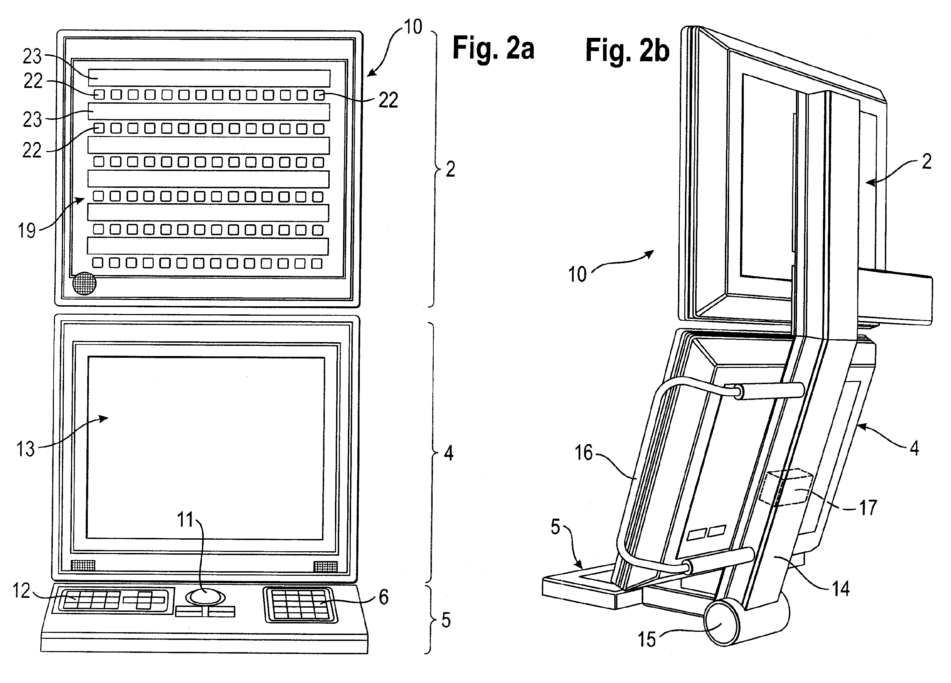

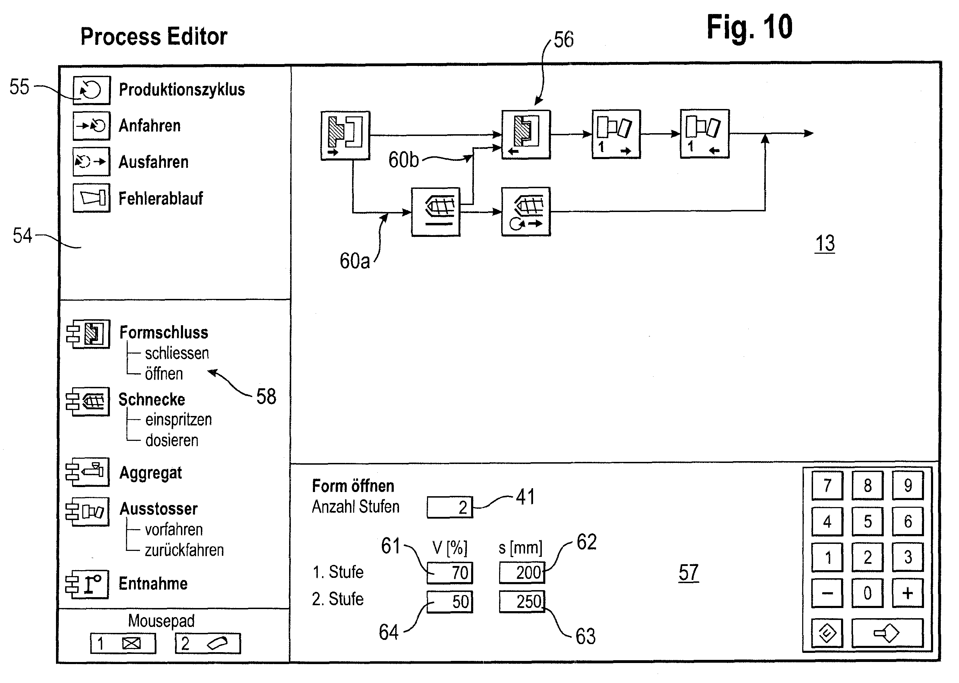

In der Folge wird auf die Figuren 2a und 2b Bezug genommen. In Analogie zur Figur 1 als Lösung des Standes der Technik zeigt die Figur 2a eine Bedieneinheit 10, oben mit einem zweiten Bedienfeld 2, in der Mitte mit einem ersten Bedienfeld 4 und unten mit einem untersten Bedienfeld bzw. der Tastatur 5. Aus den Figuren 2a und 2b ist deutlich die Modulbauweise erkennbar, wobei jedes der Bedienfelder 2, 4 und 5 ein Modul darstellt. Die Tastatur 5 kann, wie im Stand der Technik, eine Tastatureingabe 6 für die numerische Werteingabe für die Parametrierung (rechts), einen Trackball 11 (Mitte) sowie Direktsprungtasten 12 aufweisen. Dabei wird direkt der Bildschirm 13 angesteuert. Der Bildschirm 13 ist als Flachbildschirm 13 ausgebildet. Auf dem Bildschirm 13 kann die Ablauferstellung sowie die Parametrierung erstellt werden, beispielsweise gemäss Figur 10. Die Bedienfelder 2 und 4 und die Tastatur 5 sind auf einer Stützkonsole 14 befestigt, welche um ein Drehgelenk 15 in der Neigung mittels eines Haltebügels 16 verstellbar ist. In der Stützkonsole 14 ist ein weiteres Modul, nämlich das USB-Kontrollermodul 17, untergebracht.

Das oberste Modul bzw. das Bedienfeld 2 weist ebenfalls einen Flachbildschirm bzw. ein Tastenfeld 19 auf, auf dem abwechselnd streifenartige haptile Maschinenbewegungs- bzw. Follentasten 22 sowie streifenartige Bildschirm- bzw. Symbolfelder 23 angeordnet sind. Es sind als Beispiel in der Figur 2a 6 Folientastenstreifen 22 sowie je darüber 6 Bildschirm- bzw. Symbolfeldstreifen 23 angeordnet. In der Horizontalen sind auf jedem Streifen je 14 Folientasten 22 sowie zu jeder Folientaste 22 zugehörig entsprechend 14 Bildschirm- bzw. Symbolfelder 23 angeordnet. Wie bereits weiter vorne ausgeführt, stehen die Folientasten 22 sowie die Symbolfelder 23 Im direkten Datenaustausch über den Steuerungsrechner und IPC der Steuerung und den beiden Bedienfeldern.

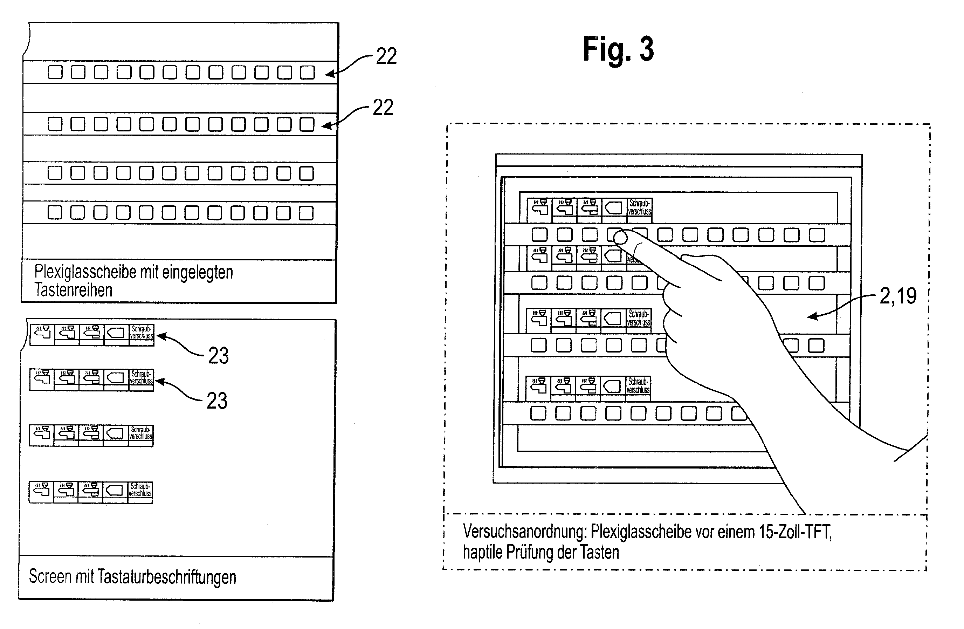

Die Figur 3 zeigt schematisch den Aufbau des zweiten Bedienfeldes. Links oben ist eine Plexiglasscheibe mit streifenartig aufgebrachten haptilen Folientasten 22 dargestellt. Darunter ist der selbe Bildschirm bzw. Screen mit den Symbolfeldern 23 mit Tastenbeschriftung gezeigt. Rechts in der Figur 3 sind als Bildmontage die beiden Funktionen in der Form von Folientasten 22 sowie die dazugehörigen Symbolfelder 23 zusammen dargestellt. Mit der Hand bzw. dem Zeigefinger ist die Betätigung einer einzelnen Folientaste 22 dargestellt.

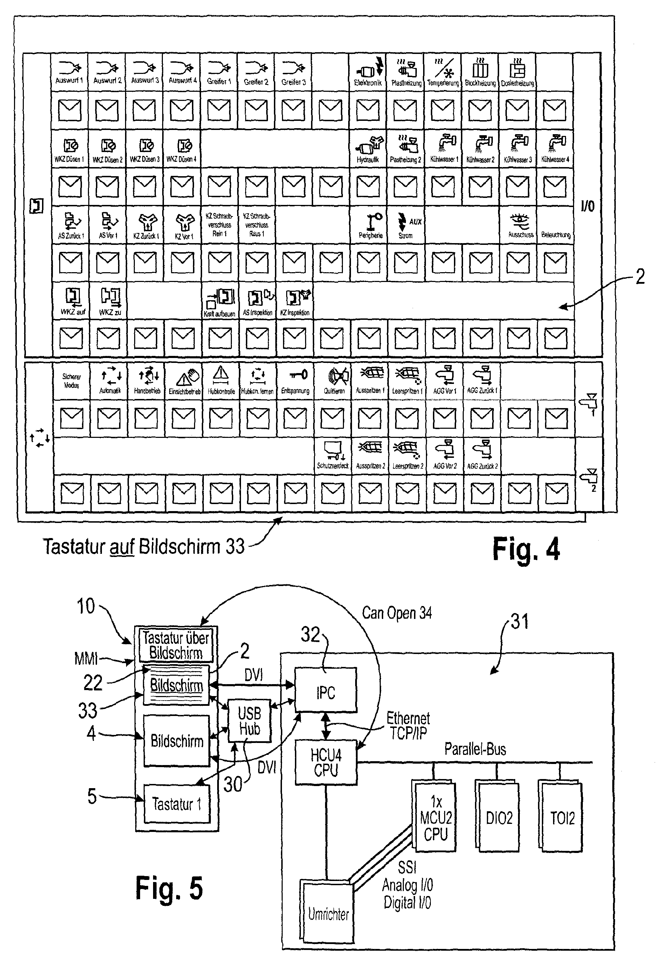

Die Figur 4 zeigt ein Beispiel des zweiten Bedienfeldes aufweisend eine Tastatur auf einem Bildschirm 33 mit dem konkreten Anwendungsfall des "Leerspritzens", welches auf diesem Bedienfeld aktiviert wurde. Bei den Symbolen handelt es sich um die klassischen in der Spritzgiessbranche verwendeten Symbole. Die Figur 4 zeigt sehr deutlich, dass gerade nur die Hälfte aller Bildschirm- bzw. Symbolfelder 23 aktiviert ist. Alle übrigen wurden im Fall "Leerspritzen" nicht benötigt. Bei jedem anderen Anwendungsfall, beispielsweise "Automatisches Spritzen", "Bereich Formschliessen" oder "Spritzaggregatseite", usw. werden entsprechend der Programmierung andere Symbole aktiviert. Dadurch kann mit der geringstmöglichen Zahl an Folientasten 22 bzw. Symbolfeldern 23 der jeweils gewünschte Eingriff visuell mit zugehörigen Symbolfeldern 23 dem Spritzgiesser vorgegeben werden. Die Quote für Fehleingaben wird dadurch auf ein Minimum gesenkt. In vielen Anwendungsfällen ist es wichtig, dass beispielsweise zwei oder mehrere Eingabestellen gleichzeitig betätigt werden können, was durch entsprechende Programmierung sichergestellt werden muss. Diese Steuerungsart betrifft vor allem Hilfssteuerungen, beispielsweise für Kernzüge, das Ausstossen oder Ausblasen von Spritzgiessteilen, usw. Diese Eingabestellen sind im Bereich der Blöcke angeordnet.

Die Figur 5 zeigt schematisch ein Beispiel für eine ganze Steuerung, z.B. für eine Spritzgiessmaschine oder Druckgiessmaschine. Links im Bild ist die Bedieneinheit 10 gezeigt. Rechts im Bild sind die elektrischen Komponenten dargestellt, welche in einem Steuerschrank 31 untergebracht sind. Kopf der Steuerung ist ein Industrie-PC (IPC) 32, der direkt mit einem USB-Hub 30 und den beiden Bildschirmen 2 und 4 über DVI verbunden ist. Der USB-Hub 30 ist ein eigenes Modul 17, das einerseits mit den Bedienfeldern 2, 4 sowie 5 und dem Steuerschrank 31 andererseits verbunden ist.

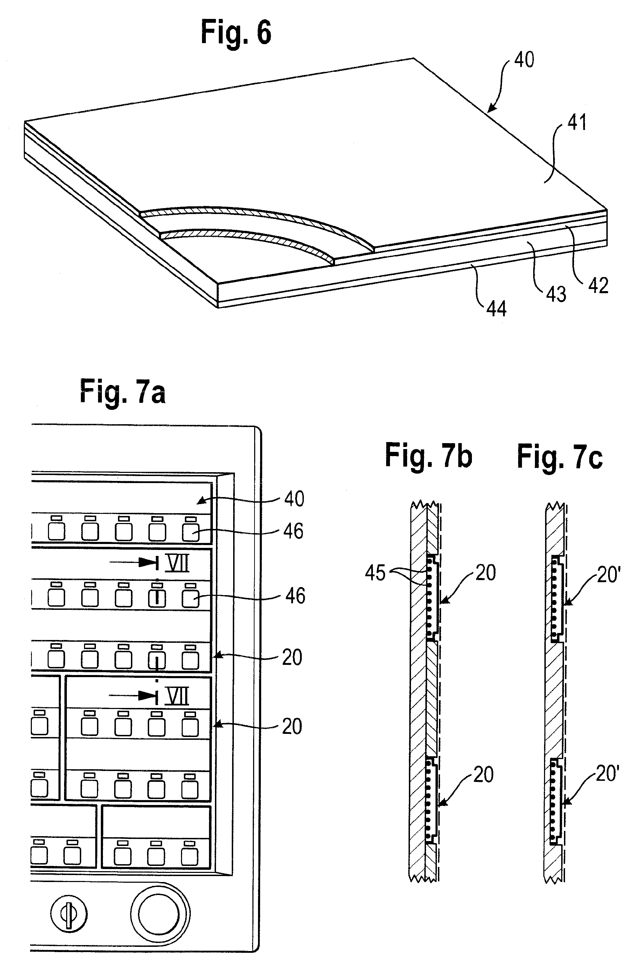

Die Figur 6 zeigt als Beispiel den schichtweisen Aufbau der Frontscheibe 40 eines Flachbildschirmes 19 mit dem Aufbau von oben nach unten: Hartbeschichtung 41, diffuse Entspiegelung 42 einer starken Luxacryl-Platte 43 sowie unten eine Hartbeschichtung 44.

Die Figur 7a zeigt beispielhaft als Ausschnitt eines Bildschirmes Folientastenstreifen 20 mit Knackfröschen 46, aufgebracht auf der Frontscheibe 40. Dabei sind die Folientastenstreifen 20 in der Frontscheibe 40 gemäss Figur 7b aufgeklebt und gemäss Figur 7c eingelassen. Wenn die Tastenstreifen aufgeklebt sind, werden die transparenten Stellen mit einer zusätzlichen aufgeklebten Scheibe erhöht. Ueber den Folientastenstreifen bzw. den aufgeklebten Scheiben ist eine Schutzfolie 20' aufgeklebt.

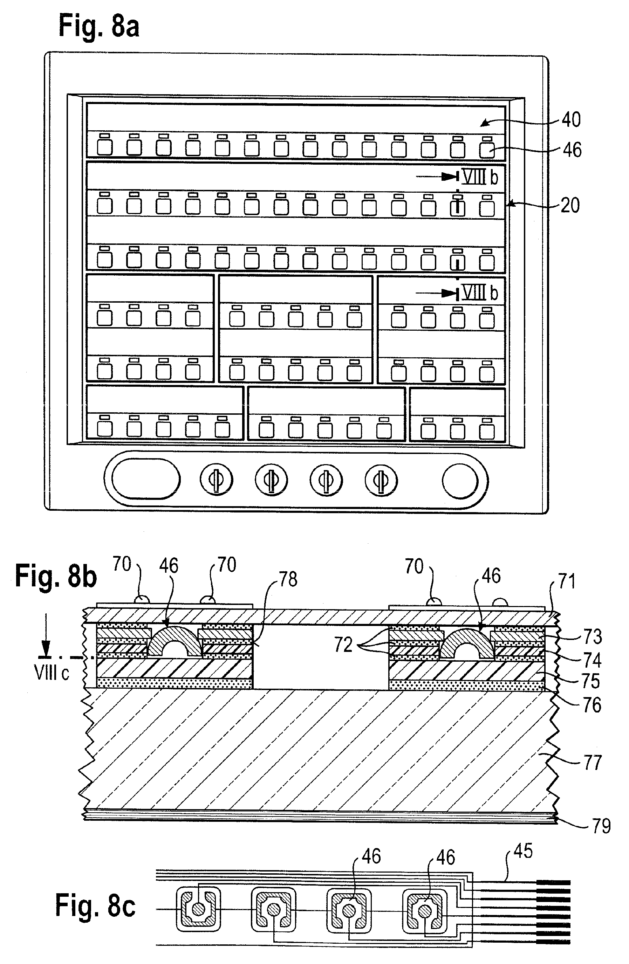

Die Figuren 8a, 8b und 8c zeigen eine weitere besonders vorteilhafte Ausgestaltung für den Aufbau des Bildschirmes mit den Maschinenbewegungstasten. Der Aufbau in Bezug auf die Tastatur ist wie folgt: Die oberste Ebene bilden Prägungen oder Bedruckungen 70, welche zusammen mit den Knackfröschen eine haptile / taktile Funktion ergeben. Die zweite Schicht ist eine Deckfolie 71, gefolgt von einer Kleberschicht 72, optimalerweise von Sicherungsringen 73, einer Arretierfolie 74, einer Printfolie 75 sowie einem Frontkleber 76. Der ganze Aufbau wird getragen von einer stabilen Glasscheibe 77, insbesondere einer Mineralglasscheibe. Bei der Figur 8b weist die Tastatur-Trägerplatte transparente Ausschnitte 78 für den Bildschirm 79 auf. Die Figuren 8a, 8b und 8c zeigen ein neues Herstellprinzip:
- Verwendung einer Mineralglasscheibe oder einer dicken Acrylglasscheibe als Basiseinheit
   - hohe Steifigkeit, hohe Härte, kostengünstig.
- Auf die Glasscheibe bzw. wird eine Folientastatur mit Knackfroschelementen aufgeklebt.
   - Die Folientastatur mit Knackfrosch ist auf einer Trägerplatte angeordnet.
- Eine Deckfolie mit Prägerand wird über den gesamten Bildschirmbereich gezogen.
   - Im Sichtbereich ist nur ein kleiner Abstand von der Folie zur Scheibe vorhanden und
   - erhält die hohe chemische Beständigkeit einer Folientastatur.
   - Es sind keine Schmutzkanten vorhanden, da vom Bediener nur eine Folienebene (Deckfolie) berührt wird.

Die Figur 8c zeigt die Leiterbahnen 45, welche von dem Knackfrosch 46 zur Steuerung geführt sind.

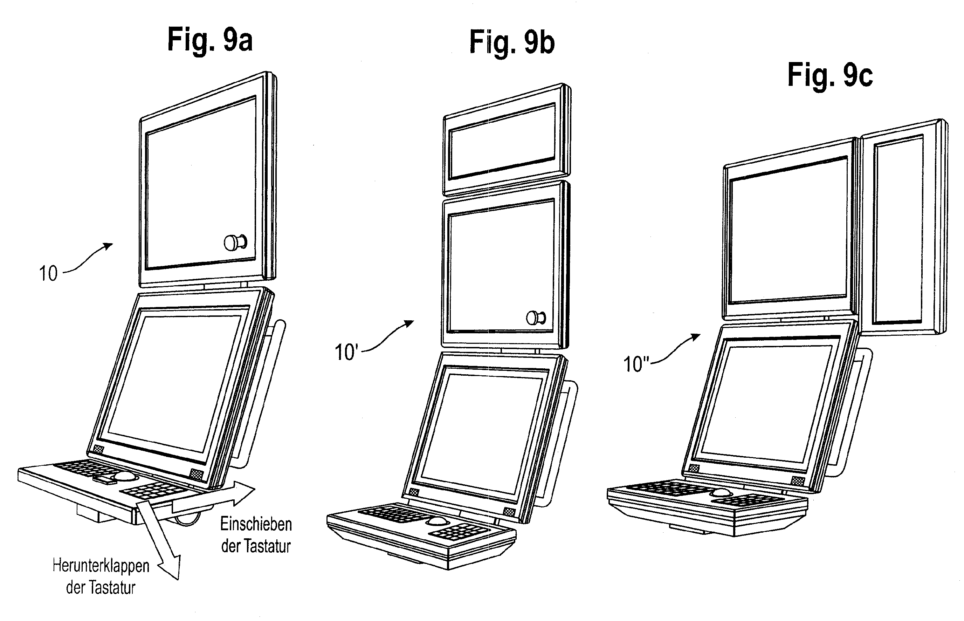

Die Figuren 9a, 9b und 9c zeigen verschiedene Aufbauten 10, 10', 10" mit zusätzlichen Modulen.

Die Figur 10 zeigt ein Beispiel für eine neue Lösung der Anmelderin für eine besondere Bildschirmdarstellung. Es handelt sich um eine vereinfachte Darstellung für einen frei programmierbaren Ablauf eines Spritzgiesszyklus mit Eingabe der Prozessparameter. Die Ablauferstellung sowie Parametrierung erfolgen am Bildschirm selber, mit Blick des Bedieners auf den Bildschirm 13, Es handelt sich dabei um eine virtuelle Prozesserstellung, noch ohne direkten Steuereinfluss auf die Maschinenkomponenten. In der Figur 10 ist auf dem Bildschirm ein Ablaufeditor dargestellt. Die Bedienung der Maschine ist stark vereinfacht, wenn der Maschinenablauf für den Bediener sichtbar ist, die dazu relevanten Informationen auf dem Bildschirm klar erkennbar sind und bei Bedarf geändert werden können. Der visualisierte Maschinenablauf auf der Basis der Spritzgiessmaschinen-Komponenten, wie Formschluss, Aggregat, Ausstosser, etc. lässt sich dabei auch als ordnendes Element für die Parametrierung der einzelnen Kommandos nutzen, mit deren Hilfe die Maschine letztlich gesteuert wird. Die einzelnen Kommandos, wie beispielsweise "Form schliessen", "Dosieren" oder "Einspritzen" können direkt dargestellt und zur Bearbeitung angeboten werden. Mit dem Ablaufeditor gemäss Bild in Figur 10 kann ein beliebiger Ablauf, beispielsweise der Produktionsablauf, modelliert und die verwendeten Komponenten und Kommandos parametriert werden. Der Ablaufeditor bzw. die Abläufe stehen im Zentrum der Programmierung der Spritzgiessmaschine. Die ganze Parametrierung der Spritzgiessmaschine inkl. der zugeordneten Peripheriegeräte kann über den Ablaufeditor eingesehen und verändert werden. Damit entfällt die heute gängige Aufteilung der Parameter auf eine Vielzahl von Eingabemasken (Bildschirmseiten).

Der Ablaufeditor besteht aus vier Bereichen:
- Liste aller vorhandenen Abläufe, Ablaufliste;
- Liste aller physikalisch vorhandenen Komponenten, Komponentenliste;
- Grafische Darstellung des Ablaufs, Ablaufdarstellungsfeld 56 und
- Eingabemaske für die Parametrierung von Komponenten und Kommandos auf dem Parametrierfeld 57.

Wird ein bestehender Ablauf 55 selektiert, so wird der Ablauf im Ablaufdarstellungsfeld 56 grafisch visualisiert. Der Benutzer kann nun den selektierten Ablauf verändern, umbenennen, kopieren oder löschen. Um einen neuen Ablauf zu erstellen, kann er in der Ablaufliste 54 die Funktion "Neu" aufrufen. Es besteht die Möglichkeit, aus der Liste der physikalisch vorhandenen Komponenten - im Sinne einer Vorauswahl - diejenigen zu selektierten, die für den neuen Ablauf benötigt werden. Um den eigentlichen Ablauf zu erstellen, selektiert der Benutzer ein Kommando 58 einer Komponente und fügt dieses in den Ablauf 56 ein. Dies wiederholt er so lange, bis der Ablauf komplett ist. Wenn der Benutzer ein Kommando im Ablauf selektiert, werden im Parametrierfeld 57 die zugehörigen Kommandoparameter angezeigt und können dort auch eingegeben werden. Ein Kommando kann in einem Ablauf mehrfach verwendet werden. Jede Verwendung (Instanz des Kommandos) hat dabei seine eigene Parametrierung. Im Ablaufdarstellungsfeld 56 können zwischen den Kommandos Synchronisationen 60a, 60b eingefügt und gegebenenfalls auch parametriert werden. Im Weiteren besteht die Möglichkeit, die im Ablauf eingefügten Kommandos und Synchronisationen zu verschieben oder zu löschen oder die zugehörige Parametrierung zu verändern. Innerhalb eines zyklischen Ablaufes sind viele Kommandos symmetrisch, d.h. wenn eine Achse (z.B. ein Ausstosser) vorgefahren wird, muss sie irgendwann auch wieder zurückgefahren werden.

Im Weiteren besteht die Möglichkeit, bestehende Abläufe als Makro in anderen Abläufen zu verwenden. Dazu wird der bestehende Ablauf wie ein Kommando als Makro in einen weiteren Ablauf eingefügt. Das Makro kann auf dem Bildschirm expandiert werden, um beispielsweise die Parametrierung anzupassen. Die Erstellung eines Ablaufes auf der Basis der vorhandenen Komponenten und deren Kommandos unterliegt keinen Einschränkungen. Der Benutzer wird jedoch im Rahmen einer Plausibilitätsprüfung auf potentielle Fehler im Ablauf hingewiesen. Wenn zum Beispiel der Ausstosser bei geschlossenem Werkzeug vorfahren soll, so muss dies durch den Benutzer bestätigt werden. Das Parametrierfeld 57 zeigt mit der Eingabestelle an, wie viele Stufen beim Beispiel der Formöffnung beteiligt sind. Die Parametrierung wird bei den Eingabestellen 61 bis 64 angezeigt, wobei die Eingabestellen 61, 64 die Geschwindigkeit in % einer maximalen Geschwindigkeit anzeigen. Die Eingabestellen 62 und 63 zeigen den Weg an. Die Zahlenwerte können beispielsweise über die numerische Tastatur 6 oder über eine Eingabestelle + / - des zweiten Bedienfeldes geändert werden (Figur 2).

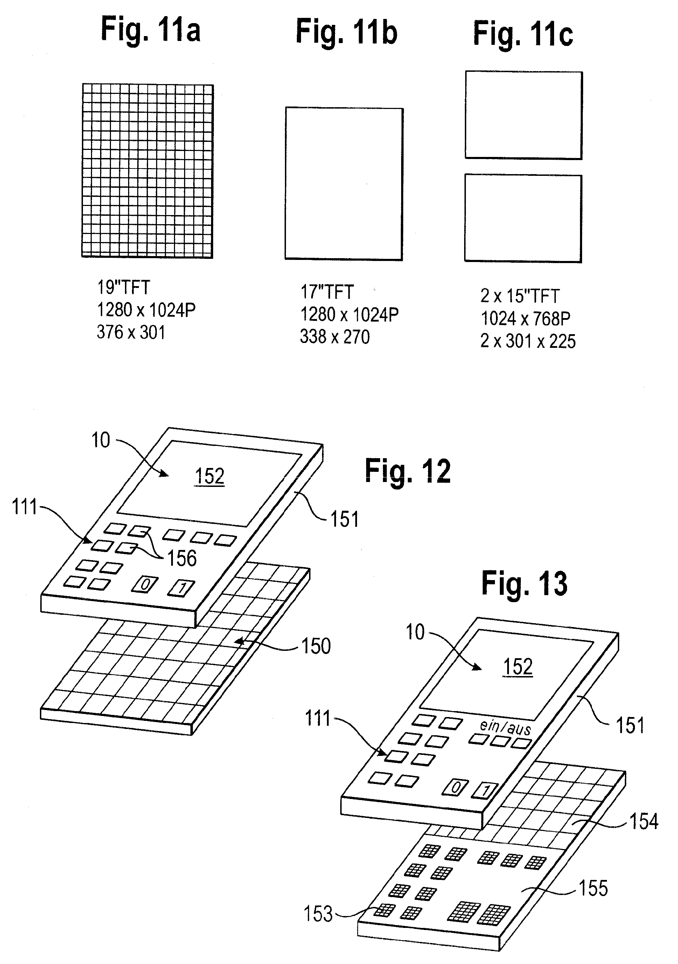

Die Figuren 11 a - c zeigen schematisch verschiedene Möglichkeiten der Anordnung des ersten und zweiten Bedienfeldes auf einem Bildschirm (Figuren 11 a und 11 b) sowie auf zwei unabhängigen Bildschirmen (Figur 11 c).

Die Figuren 12 und 13 zeigen zwei Beispiele für die konkrete Ausgestaltung des ersten und zweiten Bedienfeldes 10 bzw. 111 für taktile Tasten. Die Figur 12 zeigt eine Lösung mit einem Bildschirm 150, auf dem ganzflächlg eine Touchfolie angebracht ist. Über dem Bildschirm 150 ist in Explosionsdarstellung eine Maske 151 mit einem oberen grossen Ausschnitt 152 dargestellt. Der Ausschnitt 152 ist das erste Bedienfeld. Die untere Hälfte der Maske 151 weist einzelne taktile Tasten 156 auf. Der Touchscreen muss auf der ganzen Fläche koordinatenbezogen programmierbar sein, so dass sowohl im ersten wie auch im zweiten Bedienfeld eine fehlerfreie Zuordnung der Eingabestellen besteht. Die Maske kann beispielsweise als dünne Metall- oder Kunststoffplatte oder als geprägte Folie ausgebildet sein. Dadurch entsteht durch die Ausschnitte 152 und die darunter liegende Touchfolie ein spürbarer Rand. Dieser Rand gestattet auch ein "blindes" taktiles Erfühlen der Eingabestelle, im Sinne einer Schreibmaschinentastatur. Es kann aber auch rund um die Tasten ein erhöhter Rand bzw. eine Hochprägung vorgesehen werden, wie dies zum Teil bei mechanischen Tasten bekannt ist. Bei dem Beispiel gemäss Figur 12 können die Tasten 156 nicht gleichzeitig betätigt werden.

Bei der Figur 13 ist das zweite Bedienfeld mit taktilen Einzeltasten als Eingabestelle ausgebildet. Das zweite Bedienfeld ist sektorbezogen programmierbar. Jede Eingabestelle ist mit entsprechend sensitivem Belag und entsprechender Datenverbindung mit dem ersten Bedienfeld für einen Datenaustausch in beiden Richtungen ausgebildet. Gemäss der Figur 13 ist der obere Teil ein an sich bekannter Touchscreen-Bildschirm 154; der ganze untere Bildschirm 155 ist nur sektorweise in dem Bereich der Eingabestelle als Einzeltastatur ausgebildet. Bei dem Beispiel gemäss Figur 13 können zwei oder mehrere taktile Tasten 153 gleichzeitig betätigt werden.

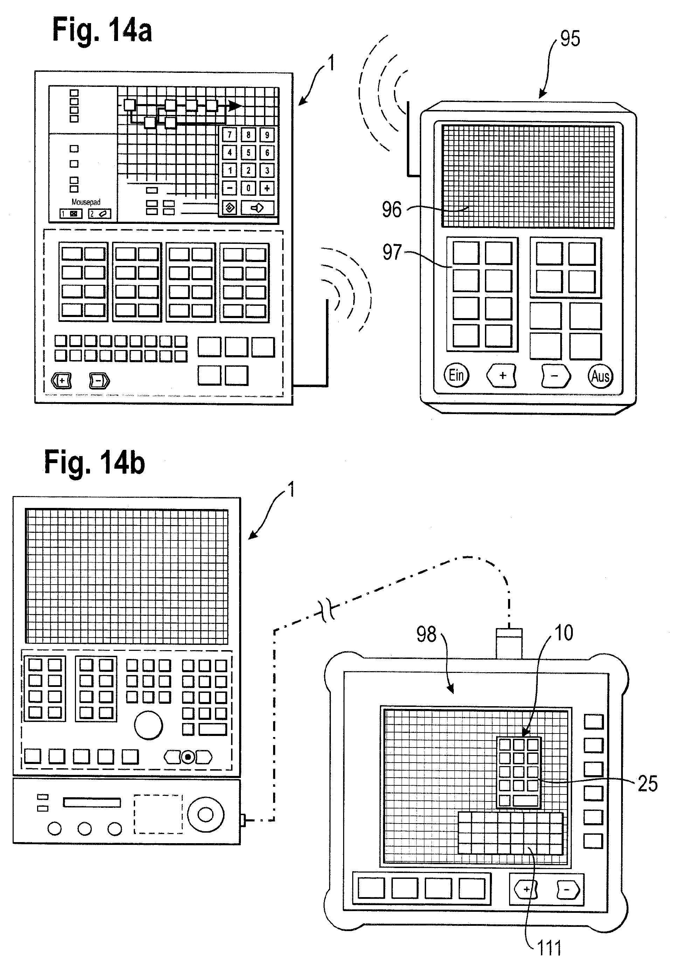

Die Figuren 14a und 14b zeigen zwei Möglichkeiten der Fernbedienung. Bei der Figur 14a ist der ortsfesten Bedieneinheit ein mobiles Handsteuergerät 95 zugeordnet, welches vorteilhafterweise über Funk mit der ortsfesten Bedieneinheit Im Datenaustausch für beide Richtungen steht. Das mobile Handsteuergerät weist einen Kleinbildschirm 96 auf. Beide Bedienfelder des Handsteuergerätes 95 sind analog zur ortsfesten Bedieneroberfläche der Bedieneinheit 1 konzipiert. Beim Handsteuergerät wäre die Programmierung des Prozessablaufes nicht bequem, da die Bedieneroberfläche zu klein wäre. Dagegen ist die Bedieneroberfläche gross genug für operative Eingriffe an der Maschine. Das Handsteuergerät hat zudem den grossen Vorteil, dass dieses in die Nähe des Ortes gebracht werden kann, wo Einfluss genommen werden muss. Primär handelt es sich dabei um Bewegungsbefehle. Entsprechend vereinfacht kann beim Handsteuergerät das Bedienfeld konzipiert sein. Die beiden Bedieneinheiten können momentan gegenseitig gesperrt werden, so dass Fehlelngaben vermieden werden.

Die Figur 14 b zeigt eine Kombination einer festen Bedieneroberfläche mit einem Handbediengerät in der Art eines Laptops bzw. Notebooks 98. Ein solches Gerät kann nicht ohne weiteres in einer Hand gehalten und beispielsweise stehend bedient werden. Es hat jedoch den Vorteil eines relativ grossen Bildschirmes. Der Laptop eignet sich insbesondere für die Ablaufprogrammlerung, welche beispielsweise sitzend in Maschinennähe durchgeführt werden kann. Das Einrichten eines neuen Werkzeuges kann ebenfalls über einen Laptop begleitet werden. Beim Laptop kann das zweite Bedienfeld gleich oder ähnlich konzipiert sein wie das zweite Bedienfeld der ortsfesten Bedieneroberfläche. Die Verbindung mit der Bedieneinheit 1 kann über Draht oder drahtlos erfolgen. Vorzugsweise wird den Bildschirmeingabestellen bzw. -tasten, insbesondere auf dem zweiten Bedienfeld, ein taktiles Feedback zugeordnet. Es gibt verschiedene Möglichkeiten, das taktile Feedback zu erzeugen:
- Optisch wird ein Feedback ohnehin realisiert, genügt aber nicht für Handsteuertasten,
- Akustischer Feedback, wegen lärmiger Umgebung jedoch nicht überall geeignet,
- Vibration durch Piezofolien,
- Vibration durch Motor mit Exzenter (wie Handy),
- Mechanische Verschiebe-Impulse durch Zugmagnet,
- Prinzip Schlagbohrmaschine (Feder / Masse-Klopfer).

Die taktile Signatur muss sich von der Vibration durch die Maschine deutlich unterscheiden. Das taktile Feedback kann für alle Tasten gleichzeitig realisiert werden. Dabei wird das Klicken der Knackfrösche simuliert durch eine kurze Impulsserie von ca. 0,1 bis 0,3 s Dauer. Dies kann beispielsweise mit einem kleinen Gleichstrommotor sehr effizient erledigt werden. Auf seiner Achse befindet sich ein Sägezahnritzel, das bei der Drehung über die Zahnflanken ein kleines Gewicht aufzieht und mit Federkraft auf die Scheibe zurückfallen lässt. Über die Drehzahl und die Dauer lässt sich ein optimales Feedback einstellen. Die neue Lösung ermöglicht einen Komfort für die verschiedensten Bedienungsarten, der bisher nicht möglich war, wie für die:
- Fernwartung,
- Fernbedienung,
- mobile Zweitbedienung, z.B. auf einem fahrbaren Wagen.

Insbesondere kann die Ablaufprogrammierung sowie die Parametrierung als Hilfestellung des Herstellers an den Anwender auf beliebige Distanz, z.B. über Internet, unterstützt werden. Auch hier gilt die allgemeine Regel der neuen Erfindung: Alles was auf dem Bildschirm (Bedienfeld 1) ist, kann auf dem Bildschirm, also auch auf Distanz gemacht werden. Ein gleiches gilt für das Bedienfeld 2 In Bezug auf das Tastendesign. Dieses kann in Bezug auf Grösse, Form und Art beliebig gestaltet werden. Insbesondere auf dem ersten Bedienfeld können im Sinne des Windows-Konzeptes einzelne Felder für die Bedienung ausschnittvergrössert werden.

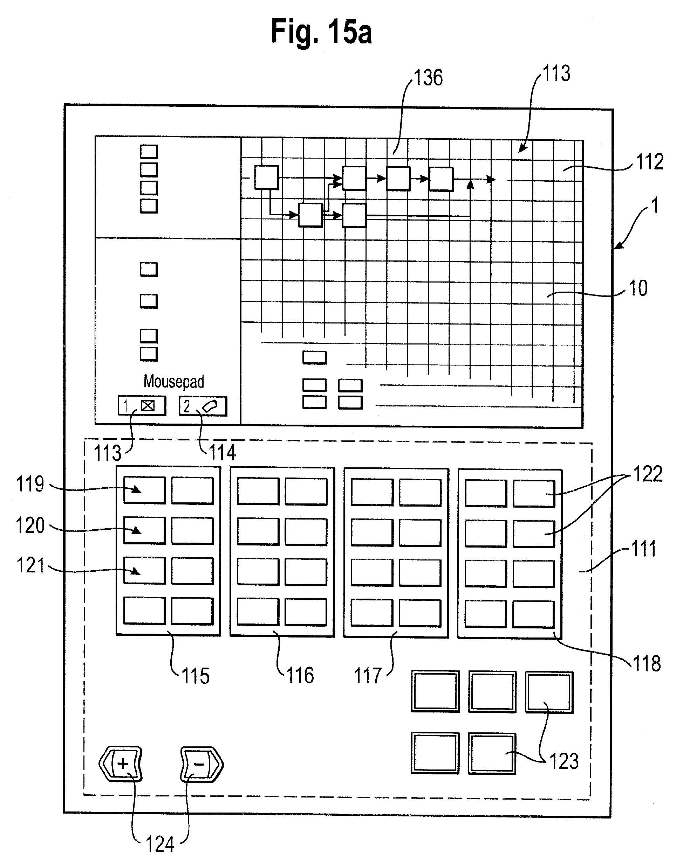

Die Figur 15a zeigt ein Beispiel für die taktile Lösung. Im oberen Bildteil ist das erste Programmler-Bedienfeld 10 dargestellt, welches mit strichpunktierter Linie eingefasst ist. Direkt darunter befindet sich das zweite operative Bedienfeld 111, welches mit strichlierter Linie eingerahmt ist. Das erste Bedienfeld dient einerseits der bildmässigen Visualisierung, z.B. aller prozess- und maschinenrelevanten Daten, Ablaufdiagrammen und aktuellen Prozesszuständen. Ein wichtiger Teil des ersten Bedienfeldes 10 liegt in der Programmierung des Spritzgiessprozesses. Als Beispiel ist auf dem Bildschirm ein Prozesseditor gezeigt, wie er in der Figur 10 in grösserem Massstab dargestellt ist. Der Bildschirm 112 des ersten Bedienfeldes 10 weist eine sensitive Oberfläche auf, welche erlaubt, die Eingabestellen koordinatenbezogen zu programmieren und entsprechend auf dem Touchscreen-Bildschirm direkt einzugeben. Symbolisch ist die sensitive Oberfläche mit dünnen Linien markiert. Das zweite operative Bedienfeld 111 weist unterschiedliche Eingabestellen auf.

Links unten auf dem ersten Bedienfeld sind zwei Schalter 113 und 114 für die Wahl von zwei Betriebsarten. Der Wahlschalter 113 ist die klassische Touchscreenfunktion für das Aktivieren von Tasten auf dem ersten Bedienfeld 10. Mit Wahlschalter 114 kann eine Mousepadfunktion als Ersatz für die klassische Mousefunktion gewählt werden. Dabei wird die gewünschte Eingabestelle durch Fahren mit dem Finger auf dem Bildschirm gemacht. Eine alternative Umschaltung geschieht automatisch mit der Umschaltung der Anwendung, beispielsweise mittels Betriebshandbuch mit Mouse-Bedienung.

Im operativen Bedienfeld 111 sind in der oberen Hälfte 4 Blöcke 115, 116, 117 und 118 dargestellt. Die Eingabestellen 119, 120 und 121 zeigen bereits konkrete Symbole "Form Öffnen" und "Form Schliessen", "Spritzgiessteil auswerfen" sowie "Spritzdüsenverschiebung". Hierzu gibt es zwei Möglichkeiten. Die erste Möglichkeit liegt darin, dass einige wenige, z.B. 4 bis 6 Eingabestellen, mit konkreten Symbolen fix belegt sind.

Es handelt sich dabei um grundlegende Eingriffe, wie:
- Form auf / zu
- Ausstosser vor / rück
- Aggregat verschieben
- Schiebetür entriegeln.

Die Programmierung kann beim Maschinenhersteller erfolgen. Bei der Ablaufprogrammierung werden diese Eingabestellen lediglich im Bedarfsfalle aktiviert. Die taktile Eingabestellen 119, 120, 121 sind für andere Funktionen gesperrt. Alle übrigen Eingabestellen 122 werden über die Programmierung bzw. Konfiguration auf dem ersten Bedienfeld von Fall zu Fall für ihre Funktion definiert. Dabei ist es möglich, dass nur die im Ablaufdarstellungsfeld 136 visualisierten Komponenten in den Eingabestellen 122 belegt bzw. definiert werden. Es kann sich dabei um eine, zwei oder mehrere Komponenten oder in sehr einfachen Fällen sogar um alle Komponenten handeln. Es wird ferner vorgeschlagen, dass zumindest die Blöcke 115 und 116 und eventuell 117 vom Maschinenhersteller über eine entsprechende Programmierung belegt werden. Der Block 118 und evtl. 117 kann als Reserve, zum Beispiel für den Anwender, reserviert werden. Es gibt ferner weitere Eingriffe, welche bei Spritzgiessmaschinen nahezu ausnahmslos benötigt werden. Auch diese Eingabestellen 123 werden fix belegt. Das gleiche gilt für die "+" (Plus)-Taste sowie die "-" (Minus)-Taste 124, um die Parameterwerte zu erhöhen oder zu erniedrigen. Im zweiten Bedienfeld befindet sich die Taste auf dem Bildschirm, so dass auf den einzelnen Tasten graphische Symbole oder kleine Filme oder Ablaufsequenzen und Zustände wie Ein/Aus darstellbar sind. Als alternative Mouse-Führung kann als Beispiel die Eingabestellen 119 zwar fix für die Formbewegung belegt sein, jedoch abhängig von der Betriebsart die Funktion ändern:
Hand: Form öffnen/schliessen
Automat: +/-, so dass damit beispielsweise die Formgeschwindigkeit angepasst werden kann.

Die konkrete Auswirkung von +/- kann durch den Bediener konfiguriert werden, mit Auswirkung auf die erste oder zweite Funktion oder auf beide.

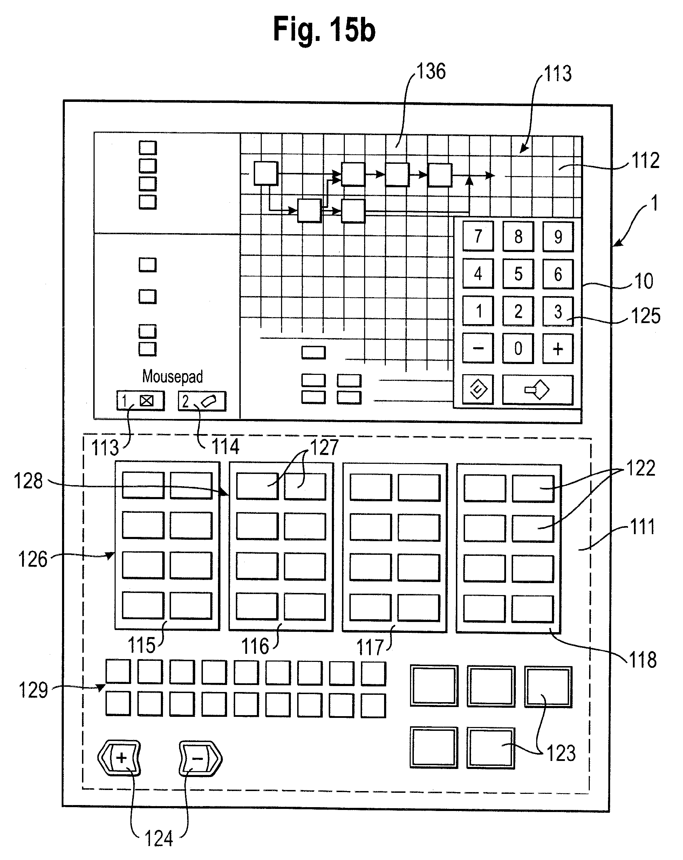

Die Figur 15b zeigt eine weitere Ausgestaltung der Figur 15a. Auf dem ersten Bedienfeld 10 ist ein numerisches Eingabefeld 125 dargestellt. Das numerische Eingabefeld wird als Window auf dem Bildschirm dargestellt, primär für die Parametrierung der einzelnen Komponenten. Im zweiten Bedienfeld 111 sind sechs weitere Eingabestellen 126, 127, 128 in aktiviertem Zustand dargestellt. Diese Eingabestellen gelten als Beispiele für eine erfindungsgemässe Definition der Eingabestellen, dies auf Grund von im Hintergrund arbeitenden Programmen sowie entsprechender Aktivierung durch die Komponentenwahl bei der Konfiguration auf dem ersten Bedienfeld 10. In Ergänzung sind auf dem zweiten Bedienfeld 111 weitere fix belegte Tasten 129, welche ebenfalls Grundfunktionen, wie Kühlwasser, Heizungen, Hydrauliksysteme, Stromversorgung, usw. betreffen. Über das numerische Eingabefeld 125 wird zu jedem variablen Prozessfaktor der gewünschte Wert eingegeben.

Eine Tastatur für Schrifttexte kann auf dem ersten Bedienfeld vorgesehen werden. Grundsätzlich können alle Eingabestellen in dem zweiten Bedienfeld als Touchscreen-Eingabestellen ausgebildet werden. Von der Funktionalität sind es jedoch in erster Linie die Eingabestellen, welche bei einer Mehrfachbenutzung automatisch für die momentane Nutzung programmierbar sind, bzw. welche von der Steuerung automatisch vom ersten Bedienfeld geändert werden können.

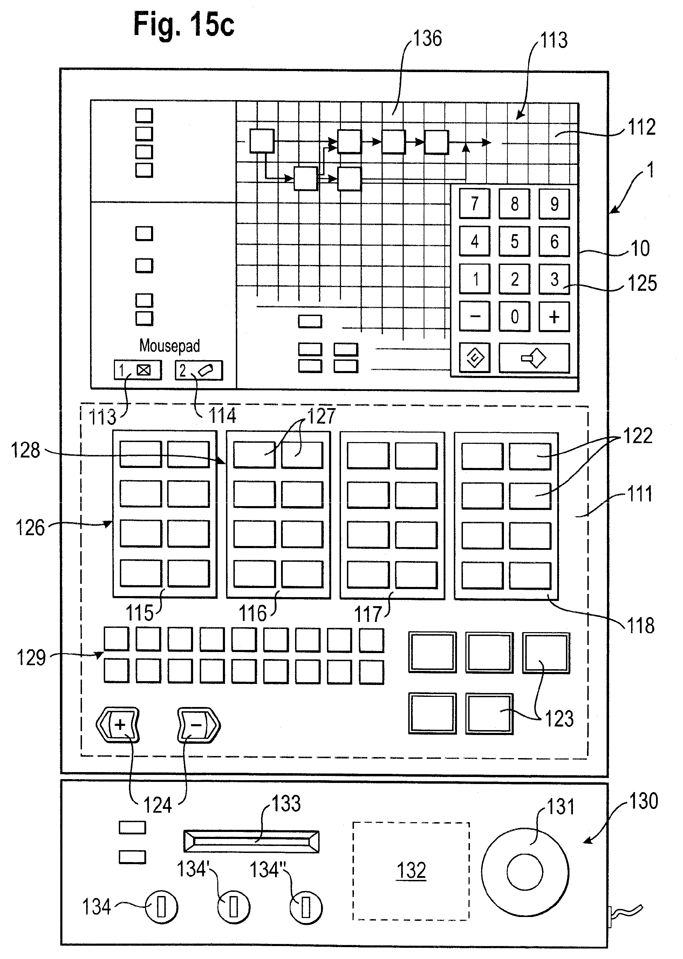

Im untersten Teil der Figur 15c ist ein Zusatzkasten 130 dargestellt, auf dem sich ein Not-Ein- / -Ausschalter 131, ein zusätzlicher Mousepad 132 und ein Schlitz 133 für das Einführen einer Karte für die Bedienererkennung befindet. Die Schlüsselstelle ist ein Betriebsartensperrschalter 134. 134' und 134" sind weitere Schlüsselschalter.

In vielen Anwendungsfällen ist es wichtig, dass beispielsweise zwei oder mehrere Eingabestellen gleichzeitig betätigt werden können, was durch entsprechende Programmierung sichergestellt werden muss. Diese Steuerungsart betrifft vor allem Hilfssteuerungen, zum Beispiel für Kernzüge, das Ausstossen oder Ausblasen von Spritzgiessteilen, usw. Diese Eingabestellen sind in dem Bereich der Blöcke 115 bis 118 angeordnet.

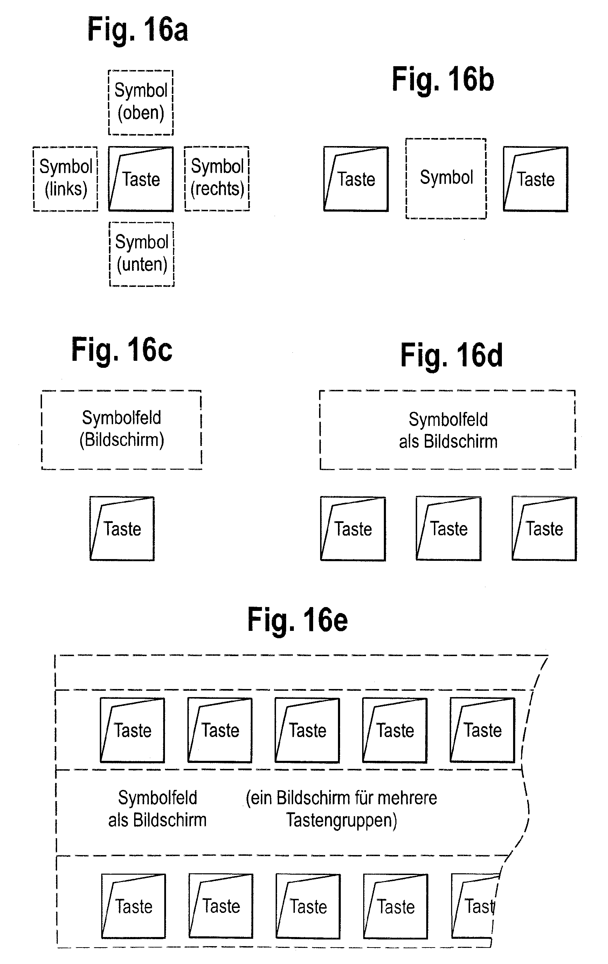

Die Figuren 16 bis 16c zeigen verschiedene Anordnungen der Symbolfelder zu den entsprechenden haptilen Tasten. Die Figur 16a zeigt, dass das Symbolfeld beliebig angeordnet werden kann, also oben, unten, links oder rechts zur Taste. Die Figur 16b zeigt, dass auch einem Symbolfeld zwei Tasten zugeordnet werden können. Die Figur 16c zeigt die Möglichkeit, dass für eine Taste ein Symbolfeld als Kleinbildschirm ausgebildet sein kann. Die Figur 16d zeigt, dass für mehrere Tasten bzw. eine ganze Tastengruppe ein Symbolfeld als Bildschirm ausgebildet sein kann. Die Figur 16e zeigt, dass ein grösseres Symbolfeld als Bildschirm für andere Tastengruppen zugeordnet werden kann. Diese Lösung eignet sich besonders für den Fall, dass das zweite Bedienfeld zusätzlich als Hilfscomputer ausgebildet ist.

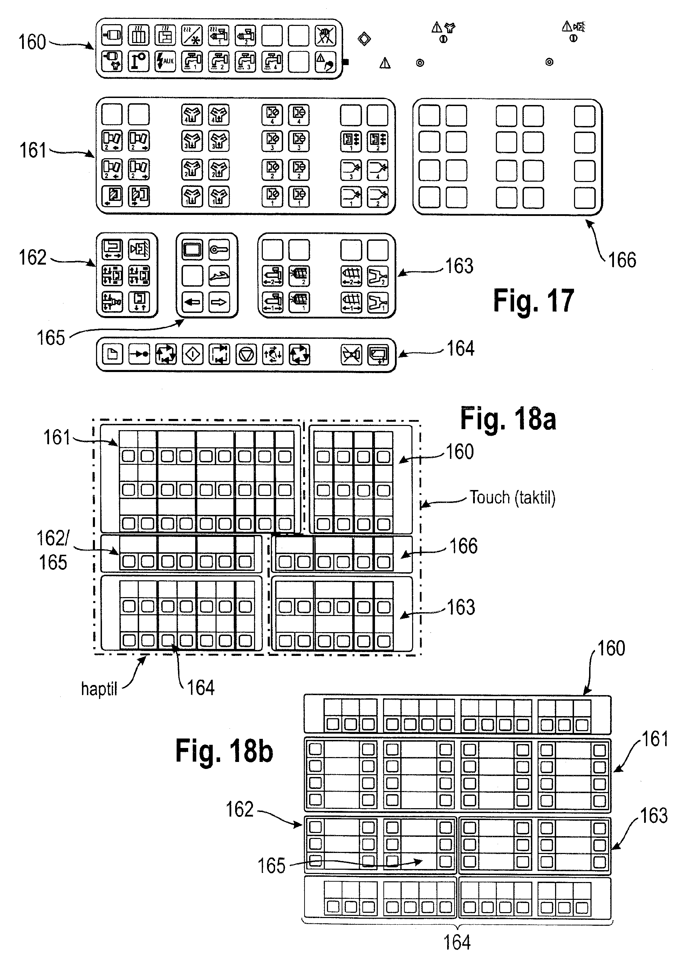

Die Figur 17 zeigt ein Beispiel für Maschinenbewegungstasten auf dem zweiten Bedienfeld, entsprechend der Figur 1. Ein besonderer Aspekt der neuen Erfindung liegt darin, dass die Maschinenbewegungstasten ähnlich angeordnet werden können, so dass vom Operator keine grosse Umstellung verlangt werden muss, wenn er eine Maschine mit einer Steuerung gemäss der neuen Erfindung bedienen muss.

Alle Maschinenbewegungstasten sind entsprechend ihrer Funktion in visuell streng getrennten Blöcken angeordnet. Im Block 160 sind Tasten angeordnet für:
- Ein- / Ausschalter
- Input / Output
- Heizung
- Wasser
- Roboter, usw.

Im Block 161 sind Funktionen auf der Formseite mit Hilfssteuerungen für die Bewegung von Ausstosser, Kernzügen, Formschluss, usw. untergebracht.

Im Block 162 befinden sich die Tasten für die Zentralverstellung sowie den Werkzeugwechsel.

Im Block 163 sind die Tasten für das Spritzgiessaggregatfunktionen bzw. -bewegungen:
- Aggregat verschieben / anpressen,
- Rotative Bewegung der Schnecke,
- Linearbewegung der Schnecke.

Im Block 164 sind die Betriebsfunktionen, wie
- Start / Stopp,
- Handbetrieb,
- automatischer Betrieb,
- andere Betriebsfunktionen,
- Bewegung Schutzverdeck.

Im Block 165 sind Tasten für Spezialfunktionen, wie zum Beispiel Entpannen, angeordnet.

Der Block 166 ist vorgesehen für Optionen, beispielsweise Sonderanforderungen des Anwenders.

Die Figuren 18a und 18b zeigen zwei bevorzugte Anordnungen für das zweite Bedienfeld. Die Figur 18a zeigt eine weitere Möglichkeit der Verwendung von haptilen und taktilen Tasten, wobei es sich bei den drei Blöcken links um haptile Tasten und bei den drei Blöcken rechts um taktile Tasten auf einem Touchscreen handelt. Die Lösung gemäss Figur 18a ist für die Zusatzverwendung als Hilfscomputer geeignet. Die Blöcke 160, 163 und 166 sind zwar taktil mit einem Symbolfeld neben der Taste dargestellt; die Symbolfelder 23 können jedoch auf den Tasten selber sein.

Auf dem zweiten Bedienfeld 2 können ein Teil der Tasten auch rein mechanische Tasten sein. Besonders bevorzugt werden jedoch die Blöcke 161, 162 und 164 und 165 als haptile Tasten ausgebildet. Es handelt sich dabei um die wichtigsten Bewegungsfunktionen, auch für den Handbetrieb.

Die Figur 18b zeigt bei den Blöcken 161, 162, 163 und 165 die Möglichkeit, zwei einzelnen Tasten ein gemeinsames Symbolfeld 23 zuzuordnen. Dies ist besonders bei Bewegungsfunktionen, wie vor / zurück, bzw. öffnen / schliessen von grossem Vorteil. Im Symbolfeld 23 kann jeweils der Zustand bzw. die Lage des Objektes bildhaft, evtl. mit Zahlen, dargestellt werden.

## Patentansprüche

1. Verfahren zur Steuerung einer oder mehrerer Spritzgiess- oder Druckgiessmaschinen bzw. einer Produktionszelle mit repetierbaren Abläufen für die Herstellung von Spritzgiess- bzw. Druckgiessteilen über eine Maschinensteuerung sowie einer Bedieneinheit (1), ausgebildet als Mensch-Maschinen-Interface (MMI), welches ein erstes Bedienfeld (4) und ein zweites Bedienfeld (2) aufweist, wobei die Produktionsparametrierung und die Konfiguration des Produktionsablaufes mittels Tasten des ersten Bedienfelds (4), mit Blick auf die Bedieneinheit bzw. einen Hauptbildschirm und die operativen Steuereingaben mittels Maschinenbewegungstasten (3) des zweiten Bedienfelds (2), mit Blick auf die Maschine eingegeben und verändert werden können,
**dadurch gekennzeichnet,**
**dass** zumindest ein Teil der operativen Steuereingaben für die Maschinenbewegung mittels für ihre Funktion programmierbarer, auf der Fläche eines Bildschirmes selbst aufgebrachter haptiler Tasten (22, 46) mit je zugeordnetem Bildschirm- bzw. Symbolfeld gemacht werden, wobei die Maschinenbewegungstasten (3) mit dem, den einzelnen Tasten (22, 46) unmittelbar zugeordneten Bildschirmfeld programmiert und fallbezogen aktiviert werden.

2. Verfahren nach Anspruch 1,
**dadurch gekennzeichnet,**
**dass** die haptilen Tasten (22, 46) als mechanische Tasten, beispielsweise als Knackfrösche, oder Kurzhubtasten oder Silikontasten, Piezoschalter, kapazitive Schalter, usw., hergestellt werden, derart, dass bei jedem Betätigen einer Taste ein haptiles Feedback erzeugt wird.

3. Verfahren nach Anspruch 1 oder Anspruch 2,
**dadurch gekennzeichnet,**
**dass** die Produktionsparametrierung und die Konfiguration des Produktionsablaufes mittels Tasten auf einem ersten Bedienfeld (4) und die operativen Steuereingaben mittels der Maschinenbewegungstasten eines zweiten Bedienfeldes (2) eingegeben und verändert werden, wobei das zweite Bedienfeld (2) im Datenaustausch von und zu dem ersten Bedienfeld steht und mit der Programmierung am ersten Bedienfeld (4) die Funktion zumindest eines Teils der Maschinenbewegungstasten des zweiten Bedienfeldes (2) definiert wird.

4. Verfahren nach Anspruch 3,
**dadurch gekennzeichnet,**
**dass** für jede Taste ein Bildschirmfeld im Bereich um die Taste programmiert und sichtbar gemacht wird, wobei das entsprechende Bedienfeld (2, 4) als Bildschirm ausgebildet ist.

5. Verfahren nach Anspruch 4,
**dadurch gekennzeichnet,**
**dass** das Bildschirmfeld zu den Maschinenbewegungstasten Funktionen an der Maschine, Informationen und Attribute zeigt für Statusanzeigen und / oder für die Anzeige der klassischen Fachsymbole, Spritzgiesssymbole und/oder zur Anzeige von Farben, beispielsweise rot, grün, gelb, und/oder für eine statische oder dynamische Anzeige und / oder als Balkendiagramme und/oder zur grafischen Darstellung von Zuständen oder als Bilder, Bildfolgen oder Videosequenzen genutzt werden.

6. Verfahren nach einem der Ansprüche 3 bis 5,
**dadurch gekennzeichnet,**
**dass** die Maschinenbewegungstasten mit dem der jeweiligen Taste zugeordneten Bildschirmfeld programmiert und flexibel verwendet werden, derart, dass ausgehend von dem ersten Bedienfeld (4) entsprechend der Produktionsmittelauswahl und/oder fallbezogen und/oder entsprechend der Betriebsart eine reduzierte Anzahl Maschinenbewegungstasten im zweiten Bedienfeld (2) aktiv werden.

7. Verfahren nach einem der Anspruche 3 bis 6,
**dadurch gekennzeichnet,**
**dass** bei Anwahl einer konkreten Funktion, ausgehend vom zweiten Bedienfeld bzw. am zweiten Bedienfeld (2), die dafür benötigten Tasten mit zugeordnetem Symbol automatisch aktiviert werden, wobei das erste (4) und zweite (2) Bedienfeld in beiden Richtungen in Funktionsverbindung stehen.

8. Verfahren nach einem der Ansprüche 3 bis 7,
**dadurch gekennzeichnet,**
**dass** für den Betriebsmodus "Automatischer Betrieb" operative Eingaben und Steuerbefehle am zweiten Bedienfeld (2) und operative Eingaben über die Tastatur mit Trackball im Bereich des ersten Bedienfeldes (4) erfolgen und entsprechende Korrekturen von Betriebsparametern im ersten Bedienfeld (4) am Bildschirm angezeigt werden und Eingang in die Speicherung finden, wobei die physikalischen Grössen bzw. Parameter, z.B. Geschwindigkeit (V), Druck (P), Kraft (F) und Weg (S) über "+" (Plus)-Tasten bzw. "-" (Minus)-Tasten eingebbar und erhöht oder erniedrigt werden können.

9. Verfahren nach einem der Ansprüche 3 bis 8,
**dadurch gekennzeichnet,**
**dass** der Bedieneinheit eine Software zugeordnet ist, zur Aus- oder Anwahl einzelner Komponentenschemen auf dem ersten Bedienfeld (4), wobei mit der Auswahl der Schemen automatisch nur dafür erforderliche mechanische Tasten des zweiten Bedienfeldes (2) aktiviert werden, so dass mittels der aktivierten Tasten komponentenspezifische Eingaben gemacht werden können.

10. Verfahren nach einem der Ansprüche 3 bis 9,
**dadurch gekennzeichnet,**
**dass** durch eine beschränkte Zahl von mechanischen Tasten bzw. Symboldarstellungen auf den Symbolfeldern und entsprechender Funktionsverbindungen dieselbe mechanische Taste mit dem zugeordneten Symbolfeld anderer Komponenten und Funktionsverbindungen beliebig unterschiedlich verwendet werden können.

11. Verfahren nach einem der Ansprüche 3 bis 10,
**dadurch gekennzeichnet,**
**dass** zumindest ein Teil der mechanischen Tasten im Bereich des zweiten Bedienfeldes (2) eigenständige Sektoren sind, derart, dass zwei oder mehrere der betreffenden mechanischen Tasten gleichzeitig betätigt werden können.

12. Verfahren nach einem der Ansprüche 9 bis 11,
**dadurch gekennzeichnet,**
**dass** das zweite Bedienfeld nach dem Windows-Prinzip genutzt wird zur gleichzeitigen oder nacheinanderfolgenden Nutzung für die Steuerung der Maschinenabläufe oder als Hilfscomputer für die Bearbeitung von Text und Zahlen.

13. Steuervorrichtung für eine oder mehrere Spritzgiess- oder Druckgiessmaschinen bzw. eine Produktionszelle mit repetierbaren Abläufen für die Herstellung von Spritzgiess- bzw. Druckgiessteilen mit einer Maschinensteuerung sowie einer Bedieneinheit (1), ausgebildet als Mensch-Maschinen-Interface (MMI), welches ein erstes Bedienfeld (4) und ein zweites Bedienfeld (2) aufweist, wobei die Produktionsparametrierung und die Konfiguration eines Produktionsablaufes mittels des ersten Bedienfeldes (4) und die operativen Steuereingaben mittels Maschinenbewegungstasten (3) des zweiten Bedienfeldes (2) eingebbar und veränderbar sind,
**dadurch gekennzeichnet,**
**dass** zumindest ein Teil der Maschinenbewegungstasten (22, 46) mittels für ihre Funktion programmierbarer, auf der Fläche eines Bildschirms aufgebrachter haptiler Tasten (22, 46) mit je unmittelbar zugeordnetem Bildschirm- bzw. Symbolfeld (23) ausgebildet sind.

14. Steuervorrichtung nach Anspruch 13,
**dadurch gekennzeichnet,**
**dass** die haptilen Tasten (22, 46) als mechanische Tasten, beispielsweise als Knackfrösche, oder Kurzhubtasten oder Silikontasten, Piezoschalter, kapazitive Schalter, usw., ausgebildet sind, derart, dass bei jedem Betätigen einer Taste ein haptiles Feedback erzeugbar ist.

15. Steuervorrichtung nach einem der Ansprüche 13 oder 14,
**dadurch gekennzeichnet,**
**dass** die Maschinenbewegungstasten (3) innerhalb bzw. auf einer Bedienfläche der Bedieneinheit angeordnet sind, wobei die Tastatur entweder
- als Streifen aufgeklebt oder
- als Streifen eingelassen oder
- als mechanische Tasten aufgeklebt sind.

16. Steuervorrichtung nach einem der Ansprüche 13 bis 15,
**dadurch gekennzeichnet,**
**dass** die Maschinenbewegungstasten (3) auf einem Bildschirm streifenartig und / oder blockartig auf der Bedienfläche angeordnet sind.

17. Steuervorrichtung nach einem der Anspruche 13 bis 16,
**dadurch gekennzeichnet,**
**dass** für die einzelnen Tasten ein Bildschirmfeld (23) im Bereich um die Taste (22, 46) programmierbar und sichtbar machbar ausgebildet ist, und dass die Maschinenbewegungstasten (3) mit dem der jeweiligen Taste (22, 46, 153, 156) zugeordneten Bildschirmfeld (2) programmierbar und fallbezogen aktivierbar sind.

18. Steuervorrichtung nach Anspruch 16 oder 17, **dadurch gekennzeichnet, dass** die haptilen Tasten (22, 46) streifenartig oder als mehrere kleine Bildschirme auf einem Bildschirm aufgebracht sind, denen je streifenartig ausgebildete Symbolfelder zugeordnet sind, wobei auf der Bildschirmfläche abwechselnd Streifen für haptile Tasten und Symbolfelder oder einzelne Bildschirme als Symbolfelder zwischen Tastenstreifen angeordnet sind.

19. Steuervorrichtung nach einem der Ansprüche 13 bis 18,
**dadurch gekennzeichnet,**
**dass** die Maschinenbewegungstasten (3) mit dem der jeweiligen Taste (22, 46, 153, 156) zugeordneten Bildschirmfeld (2) programmierbar und fallbezogen aktivierbar sind.

20. Steuervorrichtung nach einem der Ansprüche 13 bis 19,
**dadurch gekennzeichnet,**
**dass** die Maschinenbewegungstasten (3) mit dem der jeweiligen Taste zugeordneten Bildschirmfeld (2) programmierbar und flexibel verwendbar ist, derart, dass entsprechend der Produktionsmittelauswahl und / oder fallbezogen und / oder entsprechend der Betriebsart nur eine reduzierte Anzahl Maschinenbewegungstasten (3) aktivierbar ist.

21. Steuervorrichtung nach einem der Ansprüche 13 bis 20,
**dadurch gekennzeichnet,**
**dass** sie für die Maschinentasten-Funktion eine Software aufweist, über welche automatisch die aktivierbaren Eingabestellen an den entsprechenden Symbolfeldern angezeigt werden.

22. Steuervorrichtung nach einem der Ansprüche 13 bis 21,
**dadurch gekennzeichnet,**
**dass** die Maschinenbewegungstasten (3) mit den je zugeordneten Symbolfeldern eine mehrfache Funktion aufweisen:
- eine Leuchtanzeige als Statusanzeige;
- Anzeigen eines Symbols in Bezug auf die durch die Tasten auszulösende Funktion bzw. die Bedeutung der Tastenfunktion;
- als Steuereingabe und Steuerbefehl für operative Eingriffe und / oder Änderungen von Produktionsparametern
- für Bilder, Bildfolgen und Videosequenzen.

23. Steuervorrichtung nach einem der Ansprüche 13 bis 22,
**dadurch gekennzeichnet,**
**dass** das Mensch-Maschinen-Interface (MMI) modulartig aufgebaut ist und wenigstens zwei Bereiche bzw. Bedienfelder (2; 4) aufweist, die aus einem doppelt genutzten Bildschirm oder wenigstens zwei getrennten Bildschirmen besteht, bzw. dass das Mensch-Maschinen-Interface (MMI) als eine Einbildschirm-Lösung oder als eine Zweibildschirm-Lösung ausgebildet ist.

24. Steuervorrichtung nach Anspruch 23,
**dadurch gekennzeichnet,**
**dass** das Mensch-Maschinen-Interface (MMI) ein Bildschirm-Basismodul in Gestalt eines Handbedienungsmoduls für die operativen Eingriffe und / oder für eine Hilfscomputer-Funktion sowie ein Bildschirmmodul für die Ablaufkonfiguration sowie die Parametrierung aufweist.

25. Steuervorrichtung nach einem der Ansprüche 13 bis 24,
**dadurch gekennzeichnet,**
**dass** das Mensch-Maschinen-Interface mehrere Module aufweist, welche an einer Stützkonsole angebracht sind und ein USB-Kontrollermodul in der Stützkonsole angeordnet ist.

26. Steuervorrichtung nach einem der Ansprüche 13 bis 25,
**dadurch gekennzeichnet,**
**dass** die Maschinenbewegungstasten (3) mit den zugeordneten Symbolfeldern für unterschiedliche Funktionen programmierbar und nutzbar sind für:
- operative Eingriffe an der Maschine,
- und / oder als Hilfscomputer,
wobei im Falle der Hilfscomputer-Funktion zumindest ein Teil der haptilen Tasten als Eingabetastatur nach dem internationalen Qwerty- bzw. Qwertz-Prinzip oder Azerty-Prinzip (Frankreich), und die Symbolfelder als Bildschirm für die Bearbeitung von Text und Zahlen nutzbar sind.

27. Steuervorrichtung nach einem der Ansprüche 13 bis 26,
**dadurch gekennzeichnet,**
**dass** die Bildschirmfelder für die Maschinenbewegungstasten als einzelne kleine Bildschirme pro Taste oder als Kleinbildschirme für mehrere Tasten oder auf einem oder mehreren grösseren Bildschirmen ausgebildet sind.

## Claims

1. A method for controlling one or more injection moulding- or die casting machines or respectively a production cell, having repeatable sequences for the production of injection-moulded or respectively die-cast parts, via a machine control, and an operating unit (1), constructed as a man-machine interface (MMI), which has a first operating field (4) and a second operating field (2), wherein the production parameterization and the configuration of the production sequence can be inputted and changed by means of keys of the first operating field (4), while viewing the operating unit or respectively a main screen, and the operative control inputs by means of machine movement keys (3) of the second operating field (2), while viewing the machine,
**characterized in that**
at least a portion of the operative control inputs for the machine movement are made by means of haptic keys (22, 46), programmable for their function, applied on the surface of a screen itself, each having an associated screen- or respectively symbol field, wherein the machine movement keys (3) are programmed and activated in a case-related manner with the screen field directly associated with the individual keys (22, 46).

2. The method according to claim 1,
**characterized in that**
the haptic keys (22, 46) are produced as mechanical keys, for example as clicker keys, or short-stroke keys or silicone keys, piezo switches, capacitive switches, etc., such that with each actuation of a key a haptic feedback is generated.

3. The method according to claim 1 or 2,
**characterized in that**
the production parameterization and the configuration of the production sequence are inputted and changed by means of keys on a first operating field (4), and the operative control inputs by means of the machine movement keys of a second operating field (2), wherein the second operating field (2) is in data exchange from and to the first operating field and with the programming at the first operating field (4) the function at least of a portion of the machine movement keys of the second operating field (2) is defined.

4. The method according to claim 3,
**characterized in that**
for each key a screen field is programmed and made visible in the region around the key, wherein the corresponding operating field (2, 4) is configured as a screen.

5. The method according to claim 4,
**characterized in that**
the screen field to the machine movement keys shows functions at the machine, information and attributes for status displays and/or for the display of the conventional technical symbols, injection-moulding symbols and/or is used for the display of colours, for example red, green, yellow, and/or for a static or dynamic display and/or as bar diagrams and/or for the graphic presentation of statuses or as images, image sequences or video sequences.

6. The method according to one of claims 3 to 5,
**characterized in that**
the machine movement keys are programmed with the screen field associated with the respective key and used flexibly, such that starting from the first operating field (4) according to the choice of production means and/or in a case-related manner and/or according to the type of operation, a reduced number of machine movement keys become active in the second operating field (2).

7. The method according to one of claims 3 to 6,
**characterized in that**
on selection of a practical function, proceeding from the second operating field or respectively at the second operating field (2), the keys required for this with associated symbol are activated automatically, wherein the first (4) and second (2) operating field are in functional connection in both directions.

8. The method according to one of claims 3 to 7, **characterized in that**
for the "automatic operation" operating mode, operative inputs and control commands take place at the second operating field (2), and operative inputs via the keyboard with trackball in the region of the first operating field (4), and corresponding corrections of operating parameters are displayed on the screen in the first operating field (4) and enter into storage, wherein the physical quantities or respectively parameters, e.g. speed (V), pressure (P), force (F) and distance (S) can be able to be inputted and increased or decreased via "+" (plus) keys or respectively "-" (minus) keys.

9. The method according to one of claims 3 to 8,
**characterized in that**
a software is associated with the operating unit, for the selecting or choosing of individual component schemes on the first operating field (4), wherein with the selection of the schemes automatically only mechanical keys of the second operating field (2) necessary for this are activated, so that component-specific inputs can be made by means of the activated keys.

10. The method according to one of claims 3 to 9,
**characterized in that**
through a limited number of mechanical keys or respectively symbol representations on the symbol fields and of corresponding functional connections, the same mechanical key can be used differently as desired with the associated symbol field of other components and functional connections.

11. The method according to one of claims 3 to 10,
**characterized in that**
at least a portion of the mechanical keys are discrete sectors in the region of the second operating field (2), such that two or more of the mechanical keys in question can be actuated simultaneously.

12. The method according to one of claims 9 to 11,
**characterized in that**
the second operating field is used according to the Windows principle for simultaneous or successive use for controlling the machine sequences or as an auxiliary computer for the processing of text and numbers.

13. A control device for one or more injection-moulding or die casting machines or respectively a production cell with repeatable sequences for the production of injection-moulded or respectively die-cast parts with a machine control and an operating unit (1), constructed as a man-machine interface (MMI), which has a first operating field (4) and a second operating field (2), wherein the production parameterization and the configuration of a production sequence can be inputted and changed by means of the first operating field (4), and the operative control inputs by means of machine movement keys (3) of the second operating field (2),
**characterized in that**
at least a portion of the machine movement keys (22, 46) are configured by means of haptic keys (22, 46) programmable for their function, applied on the surface of a screen, with in each case a directly associated screen- or respectively symbol field (23).

14. The control device according to claim 13,
**characterized in that**
the haptic keys (22, 46) are configured as mechanical keys, for example as clicker keys, or short-stroke keys or silicone keys, piezo switches, capacitive switches, etc., such that on each actuation of a key a haptic feedback is able to be generated.

15. The control device according to one of claims 13 or 14,
**characterized in that**
the machine movement keys (3) are arranged within or respectively on an operating surface of the operating unit, wherein the keyboard is either
- glued on as a strip or
- embedded as a strip or
- glued on as mechanical keys.

16. The control device according to one of claims 13 to 15,
**characterized in that**
the machine movement keys (3) are arranged on a screen in a strip-like and/or block-like manner on the operating surface.

17. The control device according to one of claims 13 to 16,
**characterized in that**
for the individual keys, a screen field (23) is configured so as to be programmable and able to be made visible in the region around the key (22, 46), and that the machine movement keys (3) are able to be programmed and activated in a case-related manner with the screen field (2) associated with the respective key (22, 46, 153, 156).

18. The control device according to claim 16 or 17,
**characterized in that**
the haptic keys (22, 46) are applied in a strip-like manner or as a plurality of small screens on a screen, with which in each case symbol fields, configured in a strip-like manner, are associated, wherein on the screen surface alternately strips for haptic keys and symbol fields or individual screens are arranged as symbol fields between key strips.

19. The control device according to one of claims 13 to 18,
**characterized in that**
the machine movement keys (3) are able to be programmed and able to be activated in a case-related manner with the screen field (2) associated with the respective key (22, 46, 153, 156).

20. The control device according to one of claims 13 to 19,
**characterized in that**
the machine movement keys (3) are able to be programmed with the screen field (2) associated with the respective key, and able to be used flexibly such that according to the production means selection and/or in a case-related manner and/or according to the type of operation, only a reduced number of machine movement keys (3) is able to be activated.

21. The control device according to one of claims 13 to 20,
**characterized in that**
for the machine key function it has a software via which the activatable input locations are displayed automatically at the corresponding symbol fields.

22. The control device according to one of claims 13 to 21,
**characterized in that**
the machine movement keys (3) with the in each case associated symbol fields have a multiple function:
- an illuminated display as status display;
- displaying of a symbol in relation to the function to be activated by the keys, or respectively the significance of the function of a key;
- as control input and control command for operative interventions and/or changes of production parameters
- for images, image sequences and video sequences.

23. The control device according to one of claims 13 to 22,
**characterized in that**
the man-machine interface (MMI) is of modular construction and has at least two areas or respectively operating fields (2; 4), which consists of a double-used screen or at least two separate screens, or respectively that the man-machine interface (MMI) is configured as a single-screen solution or as a two-screen solution.

24. The control device according to claim 23, **characterized in that**
the man-machine interface (MMI) has a screen base module in the form of a manual operation module for the operative interventions and/or for an auxiliary computer function, and a screen module for the sequence configuration and the parameterization.

25. The control device according to one of claims 13 to 24,
**characterized in that**
the man-machine interface has several modules which are disposed on a support console, and a USB controller module is arranged in the support console.

26. The control device according to one of claims 13 to 25,
**characterized in that**
the machine movement keys (3) with the associated symbol fields are able to be programmed for different functions and able to be used for:
- operative interventions on the machine,
- and/or as an auxiliary computer,
wherein in the case of the auxiliary computer function at least a portion of the haptile keys are able to be used according to the international Querty- or respectively Qwertz principle or Azerty principle (France), and the symbol fields are able to be used as a screen for the processing of text and numbers.

27. The control device according to one of claims 13 to 26,
**characterized in that**
the screen fields for the machine movement keys are configured as individual small screens per key or as small screens for a plurality of keys or on one or more larger screens.

## Revendications

1. Procédé de commande d'une ou plusieurs machines de moulage par injection ou par pression, respectivement d'une cellule de production ayant des cycles pouvant être répétés pour fabriquer des pièces moulées par injection ou par pression par une commande de machine ainsi qu'une unité de commande (1), conçue en tant qu'interface homme-machine (MMI) qui présente un premier champ de commande (4) et un second champ de commande (2), dans lequel le paramétrage de la production et la configuration du cycle de production peuvent être saisis et modifiés au moyen de touches du premier champ de commande (4) en ce qui concerne l'unité de commande, respectivement un écran principal, et les saisies de commande opérationnelles peuvent être saisies et modifiées au moyen de touches de déplacement de la machine (3) du second champ de commande (2), en ce qui concerne la machine,
**caractérisé en ce**
**qu'**au moins une partie des saisies de commande opérationnelles pour le déplacement de la machine est effectuée par le biais de touches (22, 46) tactiles elles-mêmes placées sur la surface d'un écran et dont la fonction est programmable, avec un champ d'écran, respectivement, de symboles correspondant, dans lequel les touches de déplacement de la machine (3) sont programmées et activées en fonction des cas avec le champ d'écran attribué directement aux différentes touches (22, 46).

2. Procédé selon la revendication 1,
**caractérisé en ce que**
les touches tactiles (22, 46) sont fabriquées en tant que touches mécaniques, par exemple en tant touches à clic, ou touches à faible course ou touches en silicone, commutateurs piézo, commutateurs capacitifs, etc., de telle sorte qu'à chaque actionnement d'une touche, un retour tactile est produit.

3. Procédé selon la revendication 1 ou 2,
**caractérisé en ce que**
le paramétrage de la production et la configuration du cycle de production sont saisis et modifiés au moyen de touches sur un premier champ de commande (4), et les saisies de commande opérationnelles sont saisies et modifiées au moyen des touches de déplacement de la machine d'un second champ de commande (2), dans lequel le second champ de commande (2) est en échange de données du, et vers le, premier champ de commande et la fonction d'au moins une partie des touches de déplacement de la machine du second champ de commande (2) est définie par la programmation sur le premier champ de commande (4).

4. Procédé selon la revendication 3,
**caractérisé en ce que**
pour chaque touche, un champ d'écran est programmé et rendu visible dans la zone autour de la touche, dans lequel le champ de commande (2, 4) correspondant est conçu en tant qu'écran.

5. Procédé selon la revendication 4,
**caractérisé en ce que**
le champ de commande pour les touches de déplacement de la machine affiche des fonctions sur la machine, des informations et attributs pour des affichages de statut et/ou l'affichage des symboles techniques classiques, des symboles de moulage par injection et/ou l'affichage de couleurs, par exemple rouge, vert, jaune et/ou pour un affichage statique ou dynamique et/ou en tant que diagrammes à barres et/ou pour la représentation graphique d'états ou en tant qu'images, séquences d'image ou séquences vidéo.

6. Procédé selon l'une des revendications 3 à 5,
**caractérisé en ce que**
les touches de déplacement de la machine peuvent être programmées et employées de manière flexible avec le champ d'écran correspondant à la touche respective, de telle façon qu'en partant du premier champ de commande (4), conformément à la sélection de moyens de production et/ou en fonction des cas et/ou en fonction du mode de fonctionnement, un nombre réduit de touches de déplacement de la machine peuvent être activées dans le second champ de commande (2).

7. Procédé selon l'une des revendications 3 à 6,
**caractérisé en ce que**
lors de la sélection d'une fonction concrète, en partant du second champ de commande, respectivement sur le second champ de commande (2), les touches nécessaires portant le symbole correspondant sont activées automatiquement, dans lequel les premier (4) et second (2) champs de commande sont en liaison fonctionnelle dans les deux sens.

8. Procédé selon l'une des revendications 3 à 7,
**caractérisé en ce que**
pour le mode de fonctionnement « Marche automatique », les saisies opérationnelles et les ordres de commande sont effectuées sur le second champ de commande (2) et les saisies opérationnelles sont effectuées par le biais du clavier avec boule de commande au niveau du premier champ de commande (4) et les corrections correspondantes des paramètres de fonctionnement sont affichées dans le premier champ de commande (4) sur l'écran et entrées dans la mémoire, dans lequel les grandeurs physiques, respectivement, les paramètres par ex. de vitesse (V), de pression (P), de force (F) et de trajet (S) peuvent être saisis et augmentés ou baissés par des touches « + » (plus), respectivement « - » (moins).

9. Procédé selon l'une des revendications 3 à 8,
**caractérisé en ce que**
l'unité de commande dispose d'un logiciel pour la sélection de schémas individuels de composants sur le premier champ de commande (4), dans lequel, par la commande des schémas, seules les touches mécaniques nécessaires à cela du second champ de commande (2) sont activées automatiquement, de sorte que des saisies spécifiques aux composants peuvent être effectuées au moyen des touches activées.

10. Procédé selon l'une des revendications 3 à 9,
**caractérisé en ce que**
par un nombre limité de touches mécaniques, respectivement de représentations de symboles sur les champs de symboles et de liaisons fonctionnelles correspondantes, la même touche mécanique avec le champ de symbole correspondant d'autres composants et liaisons fonctionnelles peut être employée différemment au choix.

11. Procédé selon l'une des revendications 3 à 10,
**caractérisé en ce**
**qu'**au moins une partie des touches mécaniques au niveau du second champ de commande (2) sont des secteurs autonomes, de telle sorte que deux ou plusieurs des touches mécaniques en question peuvent être actionnées en même temps.

12. Procédé selon l'une des revendications 9 à 11,
**caractérisé en ce que**
le second champ de commande est utilisé selon le principe de Windows pour l'utilisation parallèle ou successive pour la commande des cycles de machine ou en tant qu'ordinateur auxiliaire pour le traitement de texte et de chiffres.

13. Dispositif de commande d'une ou plusieurs machines de moulage par injection ou par pression, respectivement d'une cellule de production avec des cycles pouvant être répétés pour fabriquer des pièces moulées par injection ou par pression par une commande de machine ainsi qu'une unité de commande (1), conçue en tant qu'interface homme-machine (MMI) qui présente un premier champ de commande (4) et un second champ de commande (2), dans lequel le paramétrage de la production et la configuration d'un cycle de production peuvent être saisis et modifiés au moyen du premier champ de commande (4), et les saisies de commande opérationnelles peuvent être saisies et modifiées au moyen de touches de déplacement de la machine (3) du second champ de commande (2),
**caractérisé en ce**
**qu'**au moins une partie des touches de déplacement de la machine (22, 46) sont constituées par des touches (22, 46) tactiles placées sur la surface d'un écran, dont la fonction est programmable, avec respectivement un champ d'écran, respectivement de symbole (23) attribué directement.

14. Dispositif de commande selon la revendication 13,
**caractérisé en ce que**
les touches tactiles (22, 46) sont fabriquées en tant que touches mécaniques, par exemple en tant touches à clic, ou touches à faible course ou touches en silicone, commutateurs piézo, commutateurs capacitifs, etc., de telle sorte qu'à chaque actionnement d'une touche, un retour tactile est produit.

15. Dispositif de commande selon l'une des revendications 13 ou 14,
**caractérisé en ce que**
les touches de déplacement de la machine (3) sont disposées à l'intérieur, respectivement sur une surface de commande de l'unité de commande, dans lequel le clavier est
- soit collé en tant que bandes,
- soit entré en tant que bandes ou
- soit collé en tant que touches mécaniques.

16. Dispositif de commande selon l'une des revendications 13 à 15,
**caractérisé en ce que**
les touches de déplacement de la machine (3) sont disposées en forme de bande et/ou de blocs sur la surface de commande sur un écran.

17. Dispositif de commande selon l'une des revendications 13 à 16,
**caractérisé en ce que**
pour les différentes touches, un champ d'écran (23) est programmé et rendu visible dans la zone autour de la touche (22, 46), et que les touches de déplacement de la machine (3) sont programmées et activées en fonction des cas avec le champ d'écran (2) attribué à la touche respective (22, 46, 153, 156).

18. Dispositif de commande selon la revendication 16 ou 17,
**caractérisé en ce que**
les touches tactiles (22, 46) sont appliquées en forme de bande ou en tant que plusieurs petits écrans sur un écran, auxquelles/ auxquels des champs de symboles en forme de bande sont attribués, dans lequel sur la surface d'écran, des bandes sont disposées tour à tour pour les touches tactiles, et des champs de symboles ou des écrans individuels en tant que champs de symboles sont disposés entre des bandes de touches.

19. Dispositif de commande selon l'une des revendications 13 à 18,
**caractérisé en ce que**
les touches de déplacement de la machine (3) peuvent être programmées et activées en fonction des cas avec le champ d'écran (2) attribué à la touche respective (22, 46, 153, 156).

20. Dispositif de commande selon l'une des revendications 13 à 19,
**caractérisé en ce que**
les touches de déplacement de la machine (3) peuvent être programmées et employées de manière flexible avec le champ d'écran (2) correspondant à la touche respective, de telle façon que, conformément à la sélection de moyens de production et/ou en fonction des cas et/ou en fonction du mode de fonctionnement, seul un nombre réduit de touches de déplacement de la machine (3) peuvent être activées.

21. Dispositif de commande selon l'une des revendications 13 à 20,
**caractérisé en ce**
**qu'**il présente un logiciel pour le fonctionnement des touches de la machine, par lequel les emplacements de saisie pouvant être activés sont affichés automatiquement sur les champs de symboles correspondants.

22. Dispositif de commande selon l'une des revendications 13 à 21,
**caractérisé en ce que**
les touches de déplacement de la machine (3) avec les champs de symboles correspondants, présentent une fonction multiple :
- un affichage lumineux en tant qu'affichage de statut ;
- l'affichage d'un symbole en rapport avec la fonction à déclencher par les touches, respectivement la signification de la fonction de la touche ;
- en tant que saisie de commande et ordre de commande pour des interventions opérationnelles et/ou des modifications de paramètres de production,
- pour des images, des séquences d'image et séquences vidéo.

23. Dispositif de commande selon l'une des revendications 13 à 22,
**caractérisé en ce que**
l'interface homme-machine (MMI) est conçue modulaire et présente au moins deux zones, respectivement, champs de commande (2 ; 4) qui sont composé(e)s d'un écran utilisé en double ou d'au moins deux écrans séparés, respectivement que l'interface homme-machine (MMI) est conçue en tant que solution à un écran ou en tant que solution à deux écrans.

24. Dispositif de commande selon la revendication 23,
**caractérisé en ce que**
l'interface homme-machine (MMI) présente un module de base d'écran sous forme d'un module de commande manuelle pour les interventions opérationnelles et/ou pour une fonction d'ordinateur auxiliaire ainsi qu'un module d'écran pour la configuration des cycles et le paramétrage.

25. Dispositif de commande selon l'une des revendications 13 à 24,
**caractérisé en ce que**
l'interface homme-machine (MMI) présente plusieurs modules qui sont placés sur une console d'appui, et un module de commande USB est disposé dans la console d'appui.

26. Dispositif de commande selon l'une des revendications 13 à 25,
**caractérisé en ce que**
les touches de déplacement de la machine (3) avec les champs de symboles correspondants pour différentes fonctions, peuvent être programmées et utilisées pour :
- des interventions opérationnelles sur la machine,
- et/ou en tant qu'ordinateur auxiliaire,
dans lequel, dans le cas de la fonction d'ordinateur auxiliaire, au moins une partie des touches tactiles peut être utilisée en tant que clavier de saisie selon le principe international Qwerty, respectivement Qwertz ou Azerty (France), et les champs de symboles peuvent être utilisés en tant qu'écran pour le traitement de texte et de chiffres.

27. Dispositif de commande selon l'une des revendications 13 à 26,
**caractérisé en ce que**
les champs d'écran pour les touches de déplacement de la machine sont conçus en tant que petits écrans individuels par touche ou en tant que petits écrans individuels pour plusieurs touches ou sur un ou plusieurs écrans plus grands.
